# EUROPEAN PATENT SPECIFICATION

(11) **EP 2 984 874 B1**
(45) Date of publication and mention of the grant of the patent: **03.07.2019**
(21) Application number: 14730999.1
(22) Date of filing: 11.04.2014
(51) Int. Cl.: H04W 52/28, H04W 52/46, H04W 52/36, H04W 40/32, H04L 12/715

(54) **TWO-LEVEL ROUTING COMMUNICATION METHOD FOR A MANET NETWORK, NETWORK NODE AND MOBILE NETWORK IMPLEMENTING THIS COMMUNICATION METHOD**
ZWEISTUFIGES ROUTINGKOMMUNIKATIONSVERFAHREN FÜR EIN MANET-NETZWERK, NETZWERKKNOTEN UND MOBILES NETZWERK MIT DIESEM KOMMUNIKATIONSVERFAHREN
PROCÉDÉ DE COMMUNICATION À ROUTAGE À DEUX NIVEAUX POUR RÉSEAU MANET, NOEUD DE RÉSEAU ET RÉSEAU MOBILE METTANT EN OEUVRE CE PROCÉDÉ DE COMMUNICATION

(30) Priority: 12.04.2013 IT TO20130298
(43) Date of publication of application: 17.02.2016
(73) Proprietor: LEONARDO S.p.A., 00195 Roma (IT)
(72) Inventor: PRIVITERA, Niccolò, I-00195 Roma (IT); ARMANI, Claudio, I-00195 Roma (IT); ADAMO, Luca, I-00195 Roma (IT); MACCARI, Leonardo, I-00195 Roma (IT); MARABISSI, Dania, I-00195 Roma (IT)
(74) Representative: Spalla, Pietro
(86) International application number: PCT/IB2014/060666
(87) International publication number: WO 2014/167550

(56) References cited:
- YING GE ET AL: "Hierarchical OLSR - a scalable proactive routing protocol for heterogeneous ad hoc networks", WIRELESS AND MOBILE COMPUTING, NETWORKING AND COMMUNICATIONS, 2005. (W IMOB'2005), IEEE INTERNATIONAL CONFERENCE ON MONTREAL, CANADA AUG. 22-24, 2005, PISCATAWAY, NJ, USA,IEEE, vol. 3, 22 August 2005 (2005-08-22), pages 17-23, XP010839685, ISBN: 978-0-7803-9181-9 cited in the application
- JIE WU ET AL: "A dominating-set-based routing scheme in ad hoc wireless networks", TELECOMMUNICATION SYSTEMS, vol. 18, no. 1/3, 1 January 2001 (2001-01-01), pages 13-36, XP055093188, ISSN: 1018-4864, DOI: 10.1023/A:1016783217662
- MOBILE AD HOC NETWORKING (MANET) Y LACHARITE M WANG COMMUNICATIONS RESEARCH CENTRE CANADA P MINET INRIA T CLAUSEN LIX ET AL: "Hierarchical OLSR; draft-lacharite-manet-holsr-02.txt", HIERARCHICAL OLSR; DRAFT-LACHARITE-MANET-HOLSR-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 13 July 2009 (2009-07-13), XP015063507,
- Amwar Sadat ET AL: "Reliable and energy efficient backup clustering scheme for wireless sensor networks", Proceedings of the International Conference on Information Networking (ICOIN), 27 January, 27 October 2010 (2010-10-27), pages 1-6, XP055093181, Retrieved from the Internet: URL:http://eprints.port.ac.uk/8135/1/1B-2. pdf [retrieved on 2013-12-12]
- Todd E Hunter ET AL: "Diversity through Coded Cooperation", IEEE TRANSACTIONS ON WIRELESS COMMUNICATIONS, 1 February 2006 (2006-02-01), page 283, XP55162170, DOI: 10.1109/TWC.2006.02006 Retrieved from the Internet: URL:http://ieeexplore.ieee.org/ielx5/7693/ 33835/01611050.pdf?tp=&arnumber=1611050&is number=33835 [retrieved on 2015-02-13]

## Description

### TECHNICAL FIELD

The present invention relates to a two-level routing communication method for a mobile ad hoc network (MANET). Furthermore, the present invention refers to a network node and a mobile network that implement this communication method.

### BACKGROUND ART

As is known, a MANET network is a packet network formed by a plurality of nodes, which communicate with each other via ad hoc links. The nodes therefore cooperate with each other to correctly route packets by applying relay techniques of a multi-hop type.

In practice, MANET networks are generally characterized by the high mobility of the nodes that form them, as well as by the absence of fixed infrastructures able to ensure communications between the nodes. Therefore, MANET networks are typically implemented inside extremely dynamic environments on an as-needed basis. For example, MANET networks are known of that are employed in the automotive field, where they are also known as vehicular ad hoc networks (VANET).

Over time and based on the typical characteristics of MANET networks, routing protocols have been proposed that are capable of ensuring communications between the nodes. For example, the so-called Optimized Link State Routing Protocol (OLSR protocol) is known, as defined by the Internet Engineering Task Force (IETF) and described, for example, at Internet address http://www.rfc-editor.org/rfc/rfc3626.txt.

An implementation of the OLSR protocol is described, for example, in "Optimized Link State Routing Protocol for Ad Hoc Networks", by P. Jacquet et al, Hipercom Project, INRIA Rocquencourt, BP 105, 78153 Le Chesnay Cedex, France.

The OLSR protocol is a proactive type of protocol, based on the exchange of control packets between the nodes, these packets being periodically transmitted in broadcast mode. In other words, the control packets sent by a generic node are addressed to all the other nodes of the network; consequently, all of the nodes visible to the generic node, i.e. capable of receiving the electromagnetic signals transmitted by the generic node, receive and process this packet. The broadcast transmission contemplates that the sent packet contains a specific address, also known as a broadcast address, known to all the nodes of the network.

In particular, the OLSR protocol is characterized by the fact that the control packets transmitted by the nodes are very small, as well as for the fact that only some nodes of the network retransmit, namely relay the received control packets, retransmission still taking place in broadcast mode. In this regard, although each retransmission implies, at physical level, a transmission, in general, in the present description one refers to the transmission or generation of a packet to indicate the first generation of the packet and the associated content by a first node, while one refers to the retransmission of the packet to indicate retransmission of the packet, which contemplates a modification to just the header of the packet, but not the data contained therein, the latter also being known as the message. In any case, while the verb "to retransmit" implies an effective retransmission, the verb "to transmit" can also be used to refer to the action of transmitting a packet during a retransmission, and so its use is not necessarily limited to the transmission of a packet by the first node that has generated the packet. Similarly, the verb "to send" is also used to refer to the action of transmitting or retransmitting a packet without distinction. Again, the action of generating a packet is also known as originating a packet, while the action of communicating a packet to a node disregards the fact of whether the node is near or far, and so disregards the fact of whether the communication takes place in a direct or indirect manner.

In the event of link faults or interruptions, the OLSR protocol does not generate any additional traffic with respect to the already mentioned control packets. In addition, the OLSR protocol works in a completely distributed manner and does not need any central entity. In addition, the OLSR protocol does require that the control packets be received by the nodes in exactly the same order of transmission; this is due to the fact that each node signs its control packets with a progressive sequence identifier.

In detail, each node selects, from its neighbours, namely the nodes that are just one hop away from it, a set of multipoint relays. In general, the proximity of two nodes does not implicate the existence of a bidirectional link between them, but implies the presence of a link that is at least one-way, and therefore implies that at least one of these two nodes is able to directly receive packets sent by the other node, without the packets having to be retransmitted by a third node. That having been said, considering one node, only the nodes neighbouring the considered node and connected to it by bidirectional links can be selected as multipoint relays of the considered node.

Referring to a generic node N, and indicating the corresponding set of multipoint relays as MPR(N), each node of the MPR(N) set, when it receives a control packet transmitted by node N, reads and processes the control packet, and subsequently retransmits the control packet, still in broadcast mode. Conversely, the neighbouring nodes of node N that do not belong to the MPR(N) set, read and process the control packets sent by node N, but do not retransmit them. Each node of the MANET network stores and then updates a list of so-called MPR selectors. In particular, with reference, for example, still to node N, its list of MPR selectors is formed by nodes that are neighbours to it and that have selected it as their multipoint relay.

Given, for example, still node N, the selection of the set of multipoint relays takes place such that all the nodes that are two hops away from node N are connected to it via the multipoint relays, where a connection is intended as being over a bidirectional link. Therefore, the union of nodes neighbouring the multipoint relays contains all the nodes that are two hops away from node N. The smaller the cardinality of the set of multipoint relays, the better the operation of the OLSR protocol.

More in particular, given, for example, still node N, the selection of the set of multipoint relays takes place based on the so-called "willingness" parameter, which indicates a sort of disposition that each one of the neighbouring nodes of node N has to becoming a multipoint relay. A procedure for the selection of the multipoint relays based on willingness is described in "Request for Comments" (RFC) 3626 of the Internet Engineering Task Force. This procedure envisages that each node sets its own willingness to an integer value between zero and seven and that it communicates the set value to the other nodes, through so-called HELLO packets. Furthermore, still with reference to node N, the selection of its multipoint relays takes place in way that the nodes neighbouring it and having a willingness of seven are definitely selected as multipoint relays, and the nodes neighbouring it and having a willingness of zero are not selected as multipoint relays; the neighbouring nodes of node N that have a willingness of between one and six are instead selected with a priority proportional to the willingness value that has been set, until the set of multipoint relays is completed.

As previously mentioned, the control packets include so-called HELLO packets, which, unlike other control packets, are not retransmitted by any node of the MANET network, not even by the multipoint relays.

In particular, again given node N, this periodically transmits its own HELLO packets. Each HELLO packet contains a control header, which comprises the address of the node that has transmitted the HELLO packet. In addition, each HELLO packet contains:
- a list of the addresses of the nodes neighbouring node N and connected to node N via bidirectional links;
- a list of the addresses of the neighbouring nodes of node N, which have been heard by node N, i.e. to which node N is connected via one-way links;
- a list of the multipoint relays of node N; and
- a sequence number associated with the HELLO packet.

For completeness, the aforementioned lists present in the HELLO packet can be partial, provided that all the neighbouring nodes are indicated in HELLO packets transmitted within a given time interval by the node N. Furthermore, three different indications are used to indicate the state of the links, which respectively correspond to one-way, bidirectional and multipoint relay. In addition, to check a link with any neighbouring node Y as being bidirectional, node N detects the possible reception of a HELLO packet sent by node Y and containing the address of node N.

Each node is therefore able to determine, based on the HELLO packets it receives, its own MPR selectors, the addresses of which are stored in a table of MPR selectors.

Furthermore, each node, based on the HELLO packets it receives, is able to have knowledge of the links with nodes that are up to two hops away. In particular, again with reference to node N, this is able to maintain a neighbour table, in which it stores a plurality of entries, each entry containing the address of a corresponding node that is one hop away (neighbouring node), as well as the state of the connection with that neighbouring node and a list of the addresses of the nodes that are two hops away from node N and which are neighbours of this neighbouring node. The neighbour table also contains a sequence number, which indicates the most recent set of multipoint relays selected by node N. Each time that node N communicates its set of multipoint relays (as described hereinafter) to the other nodes, it also increments this sequence number. Furthermore, all the entries of the neighbour table are associated with corresponding holding times, the expiry of which results in the entries being deleted.

Each node is therefore able to select, based on its own neighbour table, its own set of multipoint relays, such that it satisfies the previously mentioned requirements. This set of multipoint relays will be communicated in subsequent HELLO packets that will be transmitted. In particular, selection of the set of multipoint relays for node N is carried out each time node N detects a change in its neighbouring nodes, due, for example, to a fault on a bidirectional link, or the addition of a bidirectional link with a new node; furthermore, node N performs a new selection each time it detects a change in the nodes two hops away from it and which are connected to it through bidirectional links. Therefore, each node updates its own multipoint relays on every reception of a HELLO packet.

In greater detail, at a time t₁, the union of the nodes neighbouring the multipoint relays of node N contains all the nodes that are two hops away from node N, assuming that the information contained in the neighbour table of node N corresponds to the links present at time t₁ between node N and the nodes that are up to two hops away from node N. In other words, the information contained in the neighbour table are at the most related to a time t₀, prior to time t₁, when it is possible that the aforementioned statement regarding the union of the neighbouring nodes is temporarily untrue, due, for example, to the approach of node unknown to node N. In any case, the aforementioned statement becomes true in steady state, or when, still given node N for example, the changes in the respective set of its neighbouring nodes are slow with respect to the times with which the nodes transmit the HELLO packets.

Still with reference to the MPR selector table, the addresses of the MPR selectors contained therein are associated with corresponding sequence numbers, which are equal to the sequence numbers stored precisely by the MPR selectors and communicated by means of the HELLO packets. Furthermore, the entire MPR selector table is associated with a corresponding MPR selector table sequence number, which is equal to the most recent sequence number associated with a HELLO packet that has been received and which has caused a change in the MPR selector table.

The control packets further comprise so-called topology control (TC) packets, which are periodically transmitted by the multipoint relays in broadcast mode.

Still with reference, by way of example, to node N, each TC packet that it transmits contains:
- the address of the node that originated it;
- the set of its MPR selectors; and
- the MPR selector table sequence number, which is precisely associated with its own MPR selector table.

In particular, the list of MPR selectors contained in the TC packet can be partial, provided that the complete list is sent, via two or more TC packets, within a certain refresh period. Furthermore, the time interval between the transmissions of two successive TC packets depends on the fact of whether or not the MPR selector table is modified. For example, in the case of MPR selector table modification, node N can transmit a new TC packet as soon as a minimum period after sending the previous TC packet has lapsed; subsequent TC packets can then be transmitted with a given periodicity, until a new change to the MPR selector table takes place.

Based on the TC packets received, the nodes build and update their own topology tables, in which they store information regarding the multipoint relays of the other nodes. In particular, still assuming to refer to node N, its topology table comprises one or more entries, each entry comprising:
- an address of a possible destination, namely the address of a MPR selector contained in a TC packet received by node N;
- the last-hop address related to the aforementioned possible destination, which is equal to the address of the node that has sent the aforementioned TC packet received by node N;
- the corresponding MPR selector table sequence number of the node that has sent the aforementioned TC packet received by node N; and
- a corresponding holding time, after which the entry is deleted.

In practice, the presence, inside the topology table, of an entry related to a given node indicates the possibility of reaching the given node by sending a packet to the node whose address is equal to the last-hop address contained in the entry. However, it should be noted that there could be several entries inside the topology table having a same possible destination address, but with different last-hop addresses.

More in particular, upon reception of a TC packet sent by a sending node, node N (for example) performs the following operations:
- checks whether there is an entry in its topology table in which the last-hop address is equal to the address of the sending node and, if so, whether the MPR selector table sequence number contained in this entry is greater than the MPR selector table sequence number contained in the TC packet received, in which case the TC packet is rejected without any further processing;
- in the case where the aforementioned entry exists, if its last-hop address is equal to the address of the sending node and the MPR selector table sequence number contained in this entry is less than the MPR selector table sequence number contained in the TC packet received, this entry is deleted; and
- for each MPR selector address indicated in the TC packet received, node N checks whether a destination is present in its topology table that has an address equal to the MPR selector address considered, and whether the corresponding last-hop address is equal to the address of the sending node, in which case the corresponding holding time is reset to an initial (predetermined) value; in all other cases, node N creates a new entry in its topology table, which corresponds to the MPR selector address considered.

Each one of the nodes of the MANET network also maintains its own routing table, which is built and updated based on the TC packets received, and more particularly based on the topology and neighbour tables. The routing table stores information regarding the paths, i.e. the sets of successive and connected links that enable reaching the corresponding destinations, these sets also being known as routes.

Still making reference, for example, to node N, its routing table comprises one or more entries, each of which includes:
- an address of a corresponding destination;
- a next-hop address, namely the address of a neighbouring node of node N, to which it is necessary to send a packet, if this packet is destined to the node having an address equal to the aforementioned address of a corresponding destination, which is also referred to as the destination node; and
- a distance estimate, namely an estimate of the number of hops to reach the destination node.
In practice, there is a bidirectional path between the node N and the destination node that passes through the node having an address equal to the next-hop address.

Each time node N receives a TC packet, for each destination address contained therein, it stores/updates a corresponding [last-hop, node] pair, which is actually formed by the destination address ([node]) and the address of the node that has sent the TC packet ([last-hop]). Based on the [last-hop, node] pairs, which are also referred to as connected pairs, node N determines, given a destination node, the corresponding path for reaching it. To this end, given for example a destination node R, node N searches for a connected pair [X,R], and successively for a connected pair [Z,X], and so on, until it finds a node K that is part of the MPR(N) set of multipoint relays of node N. The next-hop address related to the entry regarding destination R contained in the routing table of node N is thus equal to the address of node K.

Node N recalculates its routing table each time it detects a change in its neighbour and topology tables.

In greater detail, to calculate (or recalculate) the routing table, node N can execute the following algorithm.

Initially, any entries possibly present in the routing table are deleted. Then, the new entries are stored, starting from those that have neighbouring nodes of node N as destinations. In particular, in the case where these neighbouring nodes are connected to node N in bidirectional mode, the corresponding entries contain destination and next-hop addresses that are the same, as well as having distance estimates equal to one.

Then, entries regarding nodes that are distanced from node N by distances h+1, where h=1, are stored.

In particular, node N stores a corresponding entry for each entry in the topology table that i) includes a destination address that does not correspond to the destination address of any of the entries present in the routing table, and ii) the last-hop address of which corresponds to the destination address of an entry in the routing table with a distance estimate equal to h. This corresponding entry contains a destination address equal to the destination address of the entry in the topology table, and a next-hop address equal to the next-hop address of the entry in the routing table, the destination address of which is equal to the aforementioned last-hop address.

Then, node N sets h=h+1 and repeats the previously specified operations. In this way, node N arrives at determining its own routing table.

With regard to data traffic, the OLSR protocol is of the so-called unicast type, i.e. provision is made that, if a node, for example node N, needs to communicate a data packet to another node W, this node transmits the data packet to the node (for example, G) whose address is equal to the next-hop address contained in the entry in the routing table having a destination address that coincides with the address of the node W. To this end, node N inserts both the address of node W and the address of node G in the data packet, these still being referred to, respectively, as the destination address and the next-hop address. Furthermore, since node N originates the data packet, it inserts its own address in the data packet, which is also referred to as the source address; this last address, like the destination address, is not modified during the course of the retransmissions. In general, reference is made to the transmission (or retransmission) of the data packet from node N to node G to indicate that the packet is transmitted (or retransmitted) from node N and contains the address of node G as the next-hop address, and therefore it is physically received by all the neighbouring nodes of node N, but all the neighbouring nodes of node N, except node G, reject the data packet, or in any case, according to the multiple access technique adopted, are unable to interpret it.

The data packet is then receives by all neighbouring nodes of node N, but only node G processes the data packet and retransmits it to the node (for example, L) the address of which is equal to the next-hop address contained in the entry in the routing table of node G having a destination address that coincides with the address of the node W. The procedure is then repeated, until the data packet is received by node W. In order to limit the duplication of packets already sent, the multipoint relays remember the packets that they have retransmitted, whether these are TC packets or data packets sent in broadcast mode, this last option also being provided by the OLSR protocol. In particular, each multipoint relay has a parameter known as a duplicate holding time (DHT). In practice, if a multipoint relay has retransmitted a certain packet and receives this certain packet again (i.e. it receives a duplicate of the certain packet) and a period equal to time DHT has not passed since the retransmission of the certain packet, the multipoint relay refrains from retransmitting the duplicate.

That having been said, due to the adoption of multipoint relays, the OLSR protocol enables reducing the so-called signal traffic, namely the number of control packets transmitted. However, in the case where the number of nodes of the MANET network increases, an appreciable increase in signal traffic still occurs, with consequent limitation of the network's capacity. In particular, performance of the OLSR protocol drops in the case of sparse networks. Therefore, in order to improve the scalability of the OLSR protocol, variants of the protocol have been proposed.

For example, the paper "Hierarchical OLSR - A scalable proactive routing protocol for heterogeneous ad hoc networks", by Ying Ge, Louise Lamont and Luis Villasenor, IEEE International Conference on Wireless And Mobile Computing, Networking And Communications, 2005. (WiMob'2005), vol. 3, no., pp. 17, 23 Vol. 3, 22-24 Aug. 2005, describes the so-called Hierarchical OLSR (H-OLSR) protocol, which provides a three-level hierarchical structure. In general, the H-OLSR protocol expects that network is not peer-to-peer, but rather that it comprises nodes having different hardware characteristics, in terms of bands, transmission powers and transmissive technologies. More in particular, each node typically belongs to one or more of the aforesaid three levels, according to its own band and transmission power; it is therefore possible that a node belongs to more than one level if it is equipped with a corresponding number of communication interfaces that have different bands and transmission powers.

In greater detail, according to the H-OLSR protocol, communications within the lower level take place in conformity with the OLSR protocol. In particular, the nodes of the lower level form clusters, inside which the nodes communicate according to the OLSR protocol. Each cluster elects a respective cluster head, which takes charge of communications with the nodes of different clusters.

The H-OLSR protocol also expects that, in use, a backbone structure is formed, which occupies the two upper levels and enables communications between different clusters. In greater detail, the backbone structure is created and maintained in each of the two upper levels, level-by-level independent and using a transport technology that is physically or virtually different from that used in the other levels. This enables improving protocol scalability, but entails the necessity of having nodes with different hardware characteristics, in particular with regard to communication capacity. Furthermore, the selection of the cluster heads is not free, but is bound to the characteristics of the nodes, as a node belonging to just the lower level cannot be a cluster head. In turn, this entails a limitation on the possibility of dynamically reconfiguring the network.

### DISCLOSURE OF INVENTION

The object of the present invention is therefore to provide an OLSR-type communication method, i.e. based on the use of multipoint relays, which at least partially solves the drawbacks of the known art.

The paper "A dominating-set-based routing scheme in ad hoc wireless networks", of Jie Wu et al., Telecommunications Systems, vol. 18, n.1/3, 01-01-2001, pages 13-36 discloses a distributed algorithm for calculating a connected dominating set in ad hoc wireless networks, where connections of nodes are determined by their geographical distances.

The document "Hierarchical OLSR draft-lacharite-manet-holsr-02", Internet Engineering Task Force (IETF), Standard Working Draft, Internet Society (ISOC), n.2, 13 July 2009 discloses a Hierarchical Optimized Link State Routing (HOLSR) for heterogeneous mobile ad hoc networks, which takes advantage of the router's distinct communications capabilities to reduce the routing control overhead in large heterogeneous ad hoc networks.

The paper "Reliable and energy efficient backup clustering scheme for wireless sensor networks" of A. Sadat et al., Proceedings of International Conference on Information Networking, 27-10-2010, pages 1-6 discloses a backup cluster head scheme where the role of cluster head rotates among selected member nodes within the cluster for balanced energy dissipation.

The paper "Diversity through coded cooperation", of Todd E. Hunter, IEEE Transactions on Wireless Communications, 01-01-2006, vol.5, no.2, page 283 discloses coded cooperation, where cooperation is achieved through channel coding methods instead of a direct relay or repetition.

According to the present invention, a communication method, a network node, a software product and a telecommunications network are provided, as respectively defined in the appended claims.

### BRIEF DESCRIPTION OF THE DRAWINGS

For a better understanding of the invention, some embodiments will now be described, purely by way of non-limitative example and with reference to the attached drawings, where:
- Figures 1 and 8 schematically show telecommunications networks;
- Figure 2 schematically shows a protocol stack;
- Figure 4 schematically shows the structure of a communication frame according to this communication method; and

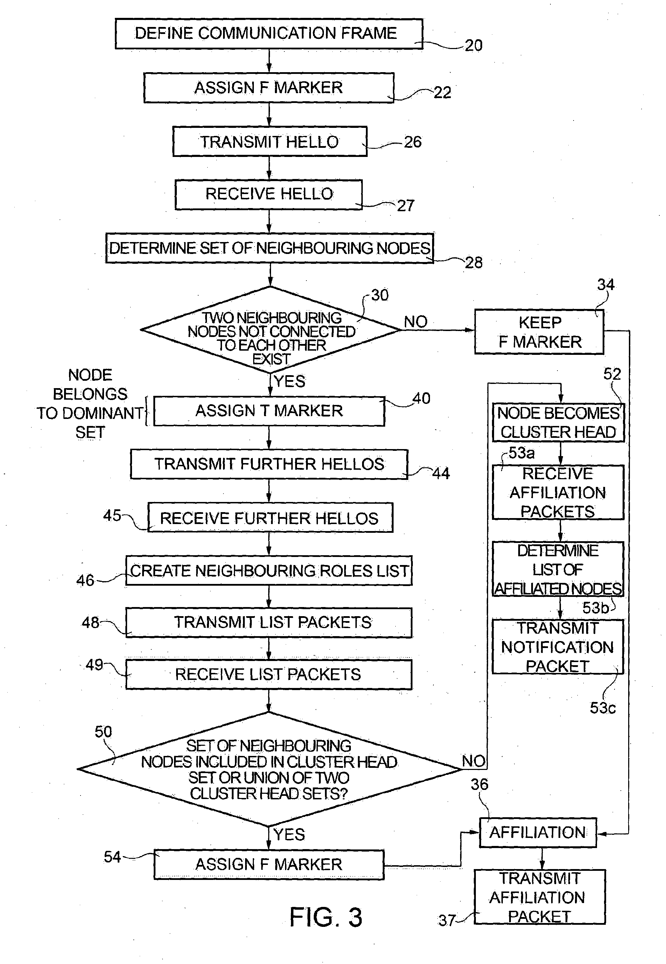

- Figures 3, 5, 6, 7a-7b, 9 and 10 show flowcharts of operations according to this communication method.

### BEST MODE FOR CARRYING OUT THE INVENTION

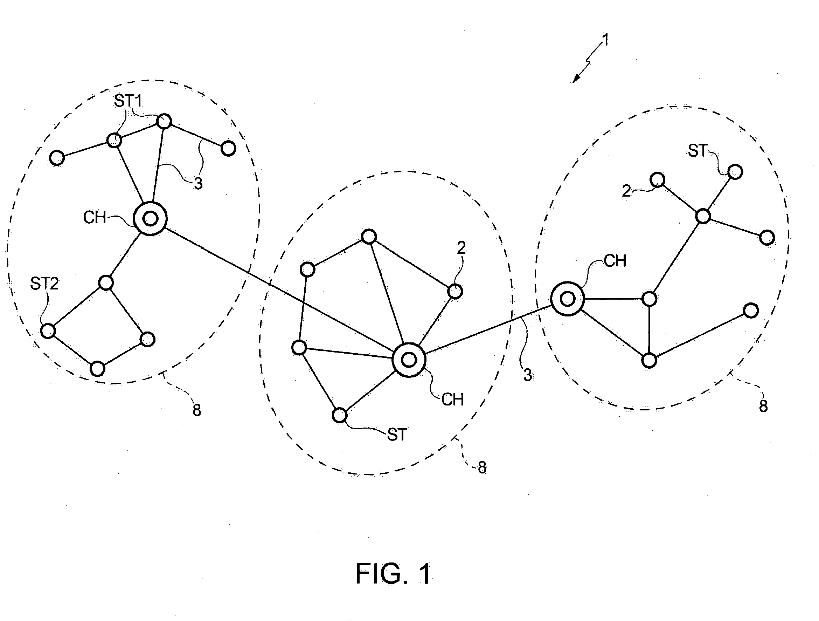

This communication method is hereinafter described with reference, purely by way of example, to the telecommunications network 1 shown in Figure 1, which is a mobile wireless packet network and includes a plurality of nodes 2, which are at least potentially mobile and communicate with each other by means of electromagnetic signals. It is further assumed, without any loss of generality, that the nodes 2 are the same as each other with regard to the hardware characteristics; thus, the mobile telecommunications network 1 is mesh-type peer-to-peer MANET network. In addition, the links 3 present between pairs of nodes 2 are also indicated in Figure 1. In practice, the presence of a corresponding link 3 between any pair of nodes 2 indicates the possibility, for each of the two nodes of the pair, to receive electromagnetic signals sent by the other node of the pair. Without any loss of generality, it is therefore implicit that the links 3 are bidirectional; on the other hand, determination of the links bidirectionality can take place in a manner that is in itself known, based on the exchange of HELLO packets.

It should also be noted that this communication method is of the OLSR type and so, except where specified otherwise, terms commonly used in the OLSR protocol are used here with the same meanings foreseen by the OLSR protocol. Therefore, except where specified otherwise, this description refers to just the differences between this communication method and the OLSR protocol.

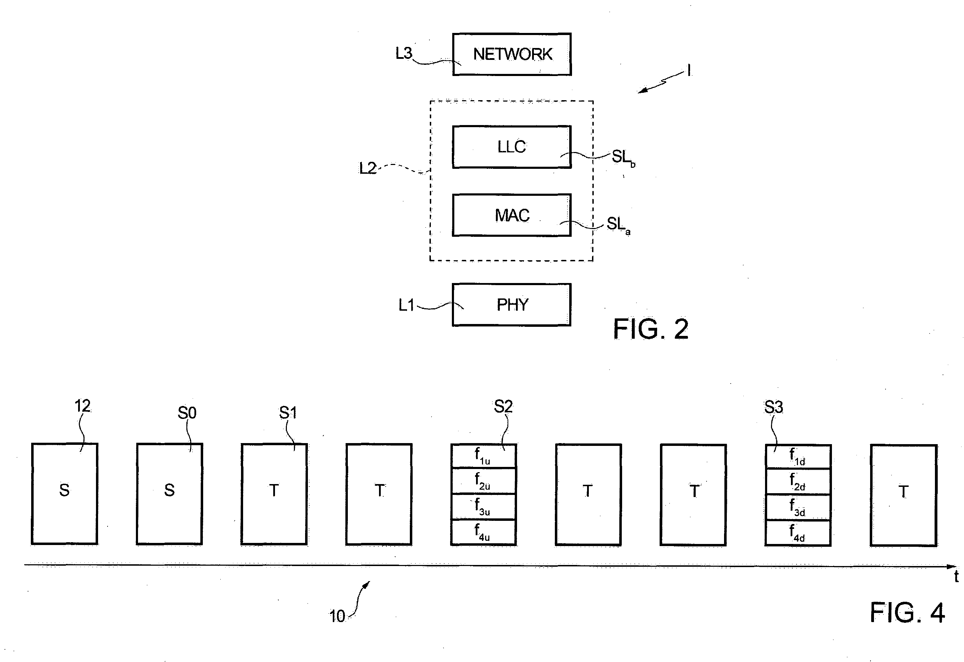

In detail, as shown in Figure 2, each node 2 implements a protocol stack formed by a physical layer L1, a data link layer L2 lying on top of the physical layer and a network layer L3 lying on top of the data link layer. Furthermore, the data link layer L2 is in turn formed by a medium access control sublayer SLₐ, also known as a MAC sublayer, and by a logical link control sublayer SL_{b}, also known as an LLC sublayer, which lies on top of the MAC sublayer. Among other things, the above-mentioned layers and sublayers perform known types of functions, in accordance with known types of communication protocols; further operations carried out by the aforesaid layers and sublayers according to this communication method will be described hereinafter.

In the following, it is assumed, without any loss of generality, that each node 2 is equipped with a single interface I (Figure 2), through which it communicates with the other nodes 2 of the telecommunications network 1. In particular, the interface I of each node implements the protocol stack shown in Figure 2. Furthermore, as previously mentioned, it has been assumed, without any loss of generality, that the interfaces of the nodes are the same.

The interface I of each node 2 is able to transmit electromagnetic signals with a power level between a first and a second power level, the second power level being higher than the first power level.

Without any loss of generality, it is also assumed that the network layer L3 conforms to the so-called Internet Protocol (IP) and that the packets transmitted by the nodes 2 are therefore of the IP type and that the nodes 2 are associated with corresponding IP addresses. Hereinafter, reference to the fact that the addresses are (for example) IP addresses is implicit.

That having been said, this communication method provides for creating two or more clusters 8 within the telecommunications network 1, each of which is formed by a corresponding plurality of nodes 2. Furthermore, given any cluster 8, the nodes 2 of this cluster 8 elect, by implementing a distributed algorithm, a clusterhead node, which, for brevity, shall be referred to hereinafter as the cluster head. In Figure 1, the cluster heads are indicated as CH, while the nodes that are not cluster heads, which shall be referred to hereinafter as standard nodes, are indicated as ST, the reference numeral 2 being used to indicate the nodes in general.

Being a cluster head or standard node implies, for each node, that it has been assigned, following the procedures described hereinafter, a corresponding role and that it retains memory of this role, by means of any information encoding method; for example, each node can store a parameter indicating the corresponding role. Hereinafter, except where specified otherwise, reference to the roles of the nodes will be implicit and so direct reference will be made to cluster heads and standard nodes, instead of referring to nodes with clusterhead roles and nodes with standard node roles.

The cluster heads CH, together with the corresponding links 3 that connect them, form a backbone structure. Furthermore, given any cluster 8, reference is made to the corresponding cluster address to indicate the address of the cluster head CH of this cluster 8.

Each standard node ST belongs to a respective cluster 8, i.e. it is affiliated with the cluster head CH of that cluster 8; therefore, the role of standard node is equivalent to the role of affiliated node. Furthermore, given a cluster 8, this comprises standard nodes ST that are only one hop away from the respective cluster head CH, these also being referred to as direct nodes to the backbone, as well as, possibly, nodes that are two or more hops away from the cluster head CH.

Hereinafter, for brevity, reference is made to standard nodes of the first type (indicated as ST1) to indicate the standard nodes that are only one hop away from the respective cluster heads CH, and reference is made to standard nodes of the second type (indicated as ST2) to indicate the standard nodes that are more than one hop away from the respective cluster heads CH; whereas reference is made to standard nodes ST to indicate standard nodes in general, independently of the distances from the respective cluster heads CH.

In general, the creation of the clusters 8 and the election of the cluster heads CH, described hereinafter, can be coordinated by the network layer L3.

Before describing the creation of the clusters 8 in detail, it should be noted that this communication method is of the time-division type, i.e. of the so-called slotted type. In particular, as shown in Figure 3, the nodes 2 define (block 20), in a manner which is in itself known, a communication frame 10, an example of which is shown in Figure 4. To this end, the nodes 2 have, in a manner that is in itself known, mutually synchronized time bases.

The communication frame 10 can be periodically repeated over time and is formed by a plurality of time intervals 12, also known as slots 12. Furthermore, the structure of the communication frame 10 is established in an adaptive manner by the cluster heads CH, based on the number of cluster heads CH and standard nodes ST affiliated with them. However, this communication method sets aside the details regarding the determination of the structure of the communication frame 10. Furthermore, since there can be periods of time in which, as explained hereinafter, the nodes still do not know their roles, as well as periods of time in which changes in role occur, the structure of the communication frame 10 can vary dynamically over time.

In general, in steady state (i.e. assuming fixed, known roles) the communication frame 10 comprises slots dedicated to signalling, which are referred to as signalling slots, as well as communications-dedicated slots, which are referred to as traffic slots. In particular, the signalling slots are dedicated to the transmission of HELLO packets and information regarding the operation of the telecommunications network 1, while the traffic slots are dedicated to the transmission or retransmission of TC packets and data packets. Furthermore, the signalling slots can be used by the nodes that have still not determined their role, or are engaged in determining their role, as well as by cluster heads CH during the operations of defining and updating the communication frame 10, the latter operation not being shown in Figure 3.

The communication frame 10 further comprises one or more slots dedicated to uplink communications with the cluster heads CH, which are referred to as uplink C-slots, and one or more slots dedicated to downlink communications with the cluster heads CH, which are referred to as downlink C-slots.

In Figure 4, the signalling slots are indicated by S0 and the traffic slots are indicated by S1, while the uplink and downlink C-slots are indicated by S2 and S3 respectively. Purely by way of example, the communication frame 10 shown in Figure 4 is formed by nine slots 12 and comprises, in particular, two signalling slots S0, five traffic slots S1, one uplink C-slot S2 and one downlink C-slot S3; this communication frame 10 thus refers to the case where the telecommunications network 1 comprises a single cluster head CH, since at least one downlink C-slot S3 and at least one uplink C-slot S2 are associated with each cluster head CH.

As at least one downlink C-slot S3 and at least one uplink C-slot S2 are associated with each cluster head CH, and considering that there are periods of time in which no cluster head CH might yet have been determined, the communication frame 10 can be devoid of downlink C-slots and uplink C-slots in these periods. Independently of this, the following types of communication can occur during each traffic slot S1:
- transmission or retransmission, in broadcast, multicast or unicast mode, of a TC or data packet by any standard node ST of any cluster 8 to any other standard node ST neighbouring it and belonging to the same cluster, the type of transmission/retransmission being, for example, based on the type of packet transmitted/retransmitted, in conformity with the OLSR protocol (for example, in the case of a TC packet, transmission/retransmission takes place in broadcast mode); and
- transmission or retransmission, in broadcast, multicast or unicast mode, of a TC or data packet by any cluster head CH to any other neighbouring cluster head CH, the type of transmission/retransmission being, for example, based on the type of packet transmitted/retransmitted, in conformity with the OLSR protocol.

More in particular, when a standard node ST or a cluster head CH transmits or retransmits during a traffic slot S1, it performs an access, which can take place, for example, in conformity with a known type of MAC protocol, such as the so-called Carrier Sense Multiple Access (CSMA) protocol or the Time Division Multiple Access (TDMA) protocol for example.

Instead, regarding the uplink C-slots S2 and considering any cluster 8, the former are assigned to communications between the standard nodes of the first type ST1 and the cluster head CH of the cluster 8. A multipoint-to-point communication scheme is implemented during each uplink C-slot S2.

In particular, given any cluster 8 and any uplink C-slot S2, and given a number NMAX1, it is possible that a number of at most NMAX1 standard nodes of the first type ST1 transmit or retransmit (for example, in unicast mode) packets to the cluster head CH of the cluster 8.

More in particular, multiplexing is performed in each uplink C-slot S2, for example by implementing so-called Frequency-Division Multiple Access (FDMA). However, embodiments are possible in which, for example, Time-Division Multiple Access (TDMA) or Orthogonal Frequency-Division Multiple Access (OFDMA) are implemented.

In the following, it is assumed, without any loss of generality, that FDMA access is implemented.

Therefore, in the example shown in Figure 4, with NMAX1=4 and during the uplink C-slot S2, four different standard nodes of the first type ST1 can send packets to the cluster head CH of the cluster to which they belong. To this end, the four standard nodes of the first type ST1 transmit using four different frequencies, indicated as f₁ᵤ-f₄ᵤ, which are also referred to as uplink frequencies. Assignment of the uplink frequencies f₁ᵤ-f₄ᵤ to the four standard nodes of the first type ST1 can be performed by the cluster head CH, for example, based on information contained in its neighbour table, and can be communicated by the cluster head CH to the these same nodes by using communications that take place, in a manner which is in itself known, in the signalling slots S0.

In practice, the interface I of each node 2 is able to tune in to receive on a plurality of frequencies simultaneously; in this way, the cluster head CH is able to correctly receive the packets addressed to it during the uplink C-slot S2.

Instead, with regard to the downlink C-slots S3 and considering any cluster 8, the former are assigned to communications between the cluster head CH of the cluster 8 and the standard nodes of the first type ST1. A multipoint-to-point communication scheme is implemented during each downlink C-slot S3.

In particular, given any cluster 8 and any downlink C-slot S3 and given a number NMAX2, it is possible that cluster head CH transmits or retransmits (for example, in unicast mode) packets to at most NMAX2 different standard nodes of the first type ST1.

More in particular, multiplexing is performed in each downlink C-slot S3, for example by implementing so-called Frequency-Division Multiple Access (FDMA). However, embodiments are possible in which, for example, Time-Division Multiple Access (TDMA) or Orthogonal Frequency-Division Multiple Access (OFDMA) are implemented.

In the following, it is assumed, without any loss of generality, that an FDMA access is implemented in each downlink C-slot S3.

In practice, the interface I of each node 2 is able to simultaneously transmit on a plurality of frequencies; in this way, the cluster head CH is able to simultaneously send packets addressed to several standard nodes of the first type ST1, in each downlink C-slot S3.

Therefore, in the example shown in Figure 4, with NMAX1=4 and during the downlink C-slot S3, the cluster head CH transmits or retransmits up to four packets simultaneously, using four different frequencies, indicated as f_{1d}-f_{4d}, which are also referred to as downlink frequencies. For example, the four downlink frequencies f_{1d}-f_{4d} may be respectively equal to the four uplink frequencies f₁ᵤ-f₄ᵤ.

Assignment of the downlink frequencies f_{1d}-f_{4d} to the four standard nodes of the first type ST1 can be performed by the cluster head CH, for example, based on information contained in its neighbour table. Furthermore, notifying the standard nodes of the first type ST1 of the respectively assigned downlink frequencies f_{1d}-f_{4d} can also be performed by the cluster head CH, by using communications that take place, in a manner that is in itself known, in the signalling slots S0. In this way, the standard nodes of the first type ST1 can effectively tune into the corresponding downlink reception frequencies f_{1d}-f_{4d}.

It should be noted that the downlink frequencies, just like the uplink frequencies, can be reutilized between different clusters.

Before proceeding further with the description of the communications, it should be noted that the nodes 2 are preferably configured to operate both in the traditional flat-type mode, in conformity with the OLSR protocol, and according to this communication method. In particular, each node 2 is configured to switch operating mode, it being possible to implement the switching in the network layer L3. However, for simplicity, it is assumed hereinafter that the nodes 2 operate continuously according to this communication method, except where specified otherwise.

Again with reference to the operations shown in Figure 3 and the creation of the clusters 8, each node 2 performs the operations described hereinafter, with reference to a generic node 2.

The node 2 assigns itself (block 22) a first marker, which is referred to hereinafter as the F marker, i.e. it assumes the role of standard node.

Afterwards, the node 2 transmits (block 26) at least one HELLO packet, with the second power level, and inserting its role in this HELLO packet, as described hereinafter. Furthermore, the node 2 receives (block 27) HELLO packets transmitted by neighbouring nodes; these HELLO packets contain, as described in greater detail hereinafter, information regarding the roles of the nodes that have transmitted them. Furthermore, the transmission of HELLO packets by all the nodes of the telecommunications network 1 always takes place with the second power level and therefore independently of the respective roles.

Then, in a manner that is in itself known, the node 2 determines (block 28) a set of neighbouring nodes connected in bidirectional mode, based on the HELLO packets transmitted by the neighbouring nodes; to this end, the node 2 determines its own neighbour table. In a manner in itself known, the set of neighbouring nodes is encoded as a set of corresponding addresses; in fact, in this description, each node is associated one-to-one with the corresponding address and therefore reference to the address is generally implicit, except where specified otherwise.

Afterwards, based on the HELLO packets received from the neighbouring nodes, the node 2 checks (block 30) if there are two neighbouring nodes not connected to each other.

In the case where two neighbouring nodes not connected to each other do not exist (NO exit from block 30), the node 2 keeps (block 34) the F marker, i.e. it preserves the role of standard node and affiliates (block 36) with a respective cluster head CH.

Affiliation takes place in a manner that is in itself known, preferably in a way that, given a cluster 8, each standard node ST is not more than two hops away from the corresponding cluster head CH, or such that each standard node ST affiliates with the closest cluster head CH. Furthermore, the affiliation is stored and encoded by the standard nodes ST in any way whatever.

In the following, except where specified otherwise, it is assumed that the affiliation takes place such that each standard node ST is not more than two hops away from the corresponding cluster head CH. In this case, each node can determine its possible affiliation based on the HELLO packets received, therefore without needing to have received TC packets, and before the selection of the multipoint relays takes place.

After affiliation, the node 2 transmits (block 37) an affiliation packet, with the second power level. Affiliation packets are only retransmitted within the clusters where they are generated, so as to reach the respective cluster heads CH.

However, embodiments are possible in which the affiliations are not communicated through sending affiliation packets, but through the same TC packets. Furthermore, in the case where each standard node ST is not more than two hops away from the respective cluster head CH, it is possible that each node generates each of its HELLO packets so that they contain, for each neighbouring node address, the cluster addresses notified to that neighbouring node by its neighbouring nodes with the respective HELLO packets. In this case, the affiliations are notified to the cluster heads CH without even sending the affiliation packets.

Again with reference to Figure 3, in the case where two neighbouring nodes not connected to each other exist (YES exit from block 30), the node 2 assigns itself (block 40) a second marker, which is referred to hereinafter as the T marker, i.e. it joins a dominating set (DS), described in greater detail hereinafter.

Afterwards, the node 2 transmits (block 44) further HELLO packets, which comprise information regarding the fact that the node 2 is a standard node. The transmission of HELLO packets takes place, as previously explained, with the second power level.

The node 2 also receives (block 45) further HELLO packets, transmitted by neighbouring nodes.

Based on the HELLO packets received, the node 2 creates (block 46) a list of neighbouring roles, in which the following are stored:
i) the addresses of the standard nodes of the first type ST1 neighbouring the node 2 that have sent HELLO packets signalling their role;
ii) the addresses of the cluster heads CH neighbouring the node 2 that have sent HELLO packets signalling their role;
iii) the roles of the nodes referred to in points i) and ii).

The list of neighbouring roles therefore contains the above-mentioned set of neighbouring nodes.

In general, in order to build and update the list of neighbouring roles, the node 2 can adopt rules according to which, for example, a generic neighbouring node is not inserted in the list unless a predetermined number of HELLO packets are received from the latter within a predetermined time interval. Furthermore, still by way of example, the node 2 can update an entry regarding a node stored with a first role only after having received a predetermined number (for example, two) of consecutive HELLO packets from this node indicating a different role. In other words, in a manner that is in itself known, the node 2 can implement hysteresis mechanisms, during the storing of information in the list of neighbouring roles.

The node 2 transmits (block 48) list packets, in which it inserts the list of neighbouring roles, as well as its own address. Transmission takes place with the second power level; furthermore, list packets are not retransmitted.

In addition, the node 2 receives (block 49) list packets transmitted by neighbouring nodes. In this respect, it should be underlined that in Figure 3 the operations are shown in sequence for simplicity of representation, although some of the operations, or parts thereof, may be carried out in an order at least partially different with respect to that shown; in other words, the flowchart specified in Figure 3 is purely qualitative. For example, the transmission of the further HELLO packets and the list packets, just like the reception of these packets, may take place in a mutually interlaced manner.

The node 2 checks (block 50), based on the list packets sent by other cluster heads CH, if the set of neighbouring nodes it has determined i) is included in the set of neighbouring nodes determined by a cluster head CH, or ii) is included in the union of the sets of neighbouring nodes determined by two cluster heads CH and the node 2 has a lower address than the addresses of these two other cluster heads CH. It should be noted that, in any case, embodiments are possible in which the condition regarding the ratios between the addresses of node 2 and of the two other cluster heads CH is different with respect to that indicated above.

In the case where the set of neighbouring nodes determined by node 2 is not included in the set of neighbouring nodes determined by a cluster head CH, or is included in the union of the sets of neighbouring nodes determined by two cluster heads CH, but the address of the node 2 is not lower than the addresses of these two cluster heads CH (NO exit from block 50), the node 2 assumes the role of cluster head (block 52), and therefore subsequent HELLO packets will carry information regarding the fact that a node 2 is a cluster head.

Vice versa, in the case where the set of neighbouring nodes determined by node 2 is included in the set of neighbouring nodes determined by a cluster head CH, or is included in the union of the sets of neighbouring nodes determined by two cluster heads CH and the address of the node 2 is lower than the addresses of these other two cluster heads CH (YES exit from block 50), the node 2 assigns itself (block 54) the F marker, i.e. it assumes the role of affiliated node. Furthermore, since belonging to the dominating set is associated one-to-one with the assignation of the T marker, following the operations referred to in block 54, the node 2 leaves the dominating set.

After the operations referred to in block 54, the node 2, which is a standard node, performs the affiliation operations referred to in blocks 36 and 37.

In practice, the operations referred to in blocks 22-30 define an algorithm for determining a dominating set, and the operations referred to in blocks 40-54 define an (optional) algorithm for the subsequent reduction of the dominating set, these algorithms being performed continually in the background by the nodes 2. In the case where reduction of the dominating set is not performed, there is concurrence between belonging to the dominating set and being a cluster head. Furthermore, belonging to the dominating set can generally be encoded as a kind of further role.

The operations referred to in blocks 22-54 are then repeated over time. The execution of these algorithms does not involve any additional traffic with respect to that contemplated by the OLSR protocol. Furthermore, the operations referred to in blocks 22-54 can be performed by the network layer L3, based on the information provided by the MAC sublayer SLₐ (in particular, the HELLO packets). The information regarding the possible election to cluster head is then shared between the layers/sublayers of the node.

The nodes of the dominating set and the associated links form a connected type of backbone structure, i.e. such that any pair of nodes is connected by a path that can comprise several consecutive links. This means that, in the case where each standard node ST is not more than two hops away from the corresponding cluster head CH, any node 2 is not more than two hops away from the backbone structure.

As previously mentioned, when a generic node is elected to cluster head, it transmits its HELLO packets such that they contain this information, as well as its MAC address, this last address acting as a cluster identifier (or cluster ID)for the cluster to which the node belongs.

More in particular, according to this communication method, given any node 2, each HELLO packet generated by this node 2 contains the following fields:
- a first HELLO packet field, formed by two bits and alternatively equal to:
- "00", to indicate that the telecommunications network 1 operates in flat mode;
- "01", to indicate that the telecommunications network 1 operates according to this communication method and that the node that has transmitted the HELLO packet is a cluster head;
- "10", to indicate that the telecommunications network 1 operates according to this communication method and that the node that has transmitted the HELLO packet is a standard node; and
- "11", to indicate that the telecommunications network 1 is switching from flat mode to that according to this communication method;
- a second HELLO packet field, formed by one bit and able to contain a dominating set flag, which indicates whether the node that has transmitted the HELLO packet belongs or not to the dominating set; this field is therefore set at the end of the operations referred to in block 40, so as to indicate belonging or not to the dominating set; and
- a third HELLO packet field, formed by sixteen bits, which contain the cluster identifier, i.e. the address of the node, if the node that has transmitted the HELLO packet is a cluster head, or the address of the cluster head to which the node is affiliated if the node that has transmitted the HELLO packet is a standard node.

It follows that, as previously mentioned, each node inserts information in the HELLO packets it generates regarding its role, as well as information regarding its affiliation, this last piece of information being contained, in particular, in the HELLO packets transmitted after the operations of affiliation referred to in block 36 (operation not shown).

After the operations referred to in block 52, each cluster head CH receives (block 53a) affiliation packets generated by standard nodes affiliated with it and determines (block 53b) a list of affiliated nodes, which contains the set of addresses of the standard nodes ST affiliated with it; in addition, each cluster head transmits (block 53c) a notification packet containing the affiliated nodes list. The notification packet is transmitted with the second power level to all the cluster heads CH, which then process it; furthermore, the notification packet is retransmitted to all the cluster heads CH.

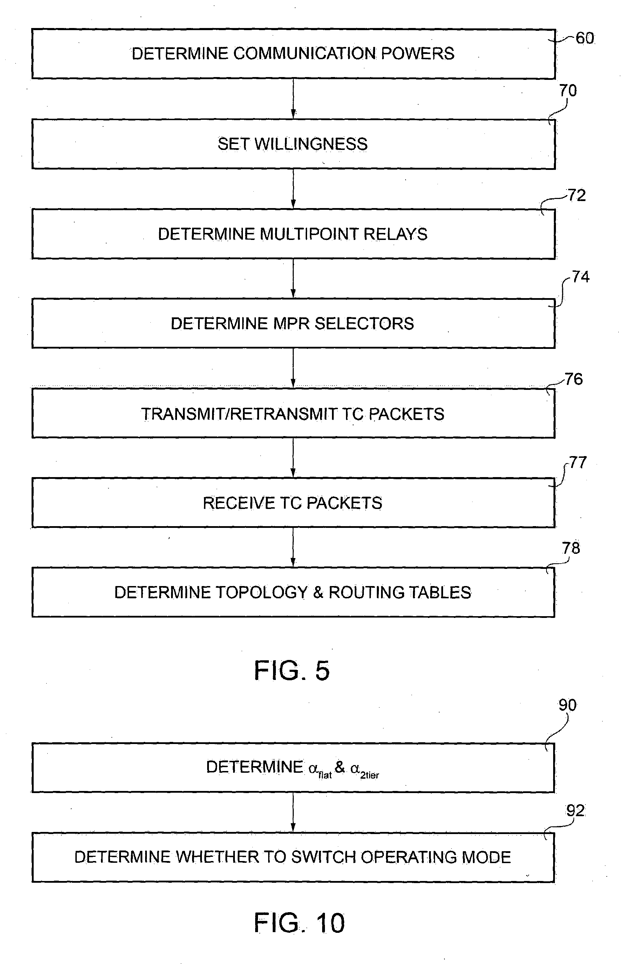

As shown in Figure 5 and still referring to a generic node 2, this node determines (block 60), in a manner which is in itself known, the power levels necessary for communicating with its neighbouring nodes, which shall hereinafter be referred to as communication powers. In particular, upon each reception of a HELLO packet transmitted by a neighbouring node, the node 2 updates and stores a corresponding communication power, which represents the minimum power level with which the node 2 must transmit in order to communicate with this neighbouring node, i.e. to ensure that this neighbouring node can correctly receive the transmitted information. Determination of the communication powers takes place in a manner that is in itself known, based on power adaptation techniques. For example, the node 2 can determine the power level with which it has received the HELLO packet and the corresponding attenuation with respect to the second power level, with which the HELLO packet was transmitted. Based on the attenuation, the node 2 can determine an estimate of the physical distance separating it from the node that has transmitted the HELLO packet and/or the so-called fading, and can therefore determine the corresponding communication power.

Again referring to a generic node 2, after this has become a cluster head (block 52), or has become affiliated with a cluster head (block 36), it sets (block 70) its willingness based on the role taken. In particular, this communication method expects that the cluster heads CH set their willingness to seven, namely the maximum possible value, and that the standard nodes ST adopt lower values, for example, predefined by a network operator.

Furthermore, the node 2 determines (block 72) its own multipoint relays. This operation takes place based on the HELLO packets received, including, for example, the HELLO packets received during the operations referred to in blocks 27 and 45. Due to the fact that the cluster heads CH set the respective willingness to the maximum possible value, the standard nodes of the first type ST1 of any cluster 8 select their cluster head CH as their multipoint relay. Furthermore, given any cluster head CH, its neighbouring cluster heads CH select this cluster head CH as their multipoint relay.

The concentration of the multipoint relays near the cluster heads CH enables reducing the overall signalling transmitted within the telecommunications network 1.

The node 2 further determines (block 74) its own MPR selectors, in a manner that is in itself known.

With regard to TC packets, the nodes 2 start to transmit/retransmit (block 76) these packets after they have become multipoint relays, should this occur. Furthermore, according to this communication method, each TC packet contains the following fields:
- a first TC packet field, formed by at least one bit and able to contain a cluster head flag, able to indicate whether the node that has transmitted the TC packet is a cluster head or a standard node; and
- a second TC packet field, formed by one bit and able to contain a dominating set flag, which indicates whether the node that has transmitted the TC packet belong or not to the dominating set.

It follows that if a node transmits a TC packet, and is therefore a multipoint relay, it inserts information in this TC packet regarding its role.

In order to ensure adequate backwards compatibility, the first, second and third fields of the HELLO packet are created inside the twenty-four bits of each HELLO packet that, according to the OLSR protocol, are reserved for supporting protocol extensions. Similarly, the first and second TC packet fields are created inside the sixteen bits of each TC packet that, according to the OLSR protocol, are reserved for supporting protocol extensions. In this way, any nodes unable to operate according to this communication method ignore these fields and so do not take part in the generation of the dominating set.

Again with reference to Figure 5, the node 2 receives (block 77) TC packets transmitted or retransmitted from nodes that are neighbours.

Regarding the processing of TC packets, the cluster heads CH process TC packets according to the following rules, described with reference to a generic cluster head CH of a generic cluster 8.

In detail, TC packets originated by standard nodes ST affiliated with different cluster heads that have reached the cluster head CH, possibly after one or more retransmissions performed by other nodes (whether cluster heads or otherwise), are rejected without using the information contained therein and without retransmitting them.

TC packets originated by other cluster heads CH that have reached the cluster head CH, possibly after one or more retransmissions performed by other cluster heads CH, are retransmitted, and the information contained therein is processed to update the topology and routing tables.

TC packets originated by standard nodes ST affiliated with the cluster head CH are processed in conformity with the OLSR protocol and are retransmitted.

In practice, each cluster head CH determines (block 78) its own topology table and own routing table based on the information contained in the TC packets generated by other cluster heads CH, or by standard nodes ST affiliated with it. The routing table of each cluster head CH therefore comprises only other cluster heads CH and the standard nodes ST of its cluster 8 as possible destinations. Furthermore, each next-hop address is associated with the communication power related to the corresponding node. In other words, each cluster head CH knows the power levels sufficient for communicating with each one of the nodes whose addresses are equal to the next-hop addresses contained in its routing table.

Regarding the processing of TC packets by the standard nodes ST, each one of them rejects, without retransmitting, TC packets sent from nodes for which it is not a multipoint relay. Regarding TC packets sent from nodes for which standard node ST is a multipoint relay, the latter processes and retransmits TC packets originated by its cluster head CH or by standard nodes ST belonging to its cluster, but rejects and does not retransmit TC packets originated by cluster heads other than its cluster head CH, or by standard nodes ST affiliated with a cluster head other than its own one.

After the foregoing operations, it occurs that:
- the routing table of any standard node ST can only store entries with destination addresses equal to addresses of nodes belonging to the same cluster 8 to which the standard node ST belongs;
- the table of any cluster head CH can only store entries with destination addresses equal to the addresses of nodes belonging to the same cluster 8 to which the cluster head CH belongs, or equal to the addresses of other cluster heads CH. Still with reference to TC packets, the transmission or retransmission of a TC packet by any standard node ST takes place with a power level equal to the maximum of the communication powers determined by the same standard node ST regarding its neighbouring nodes that belong to the same cluster 8. Instead, the transmission or retransmission of a TC packet by any cluster head node CH takes place with a power level equal to the maximum of the communication powers determined by the same cluster head CH regarding the standard nodes of the first type ST1 that are affiliated with it and its neighbouring cluster heads CH.

The described operations imply that communications between standard nodes ST belonging to different clusters pass through the cluster heads CH, i.e. the corresponding traffic is channelled over the backbone structure. Furthermore, as previously explained, the transmissions and possible retransmissions of packets take place in the traffic slots or the uplink or downlink C-slots, according to whether the node that transmits or retransmits each time is, respectively, a standard node of the second type ST2, a standard node of the first type ST1, or a cluster head CH.

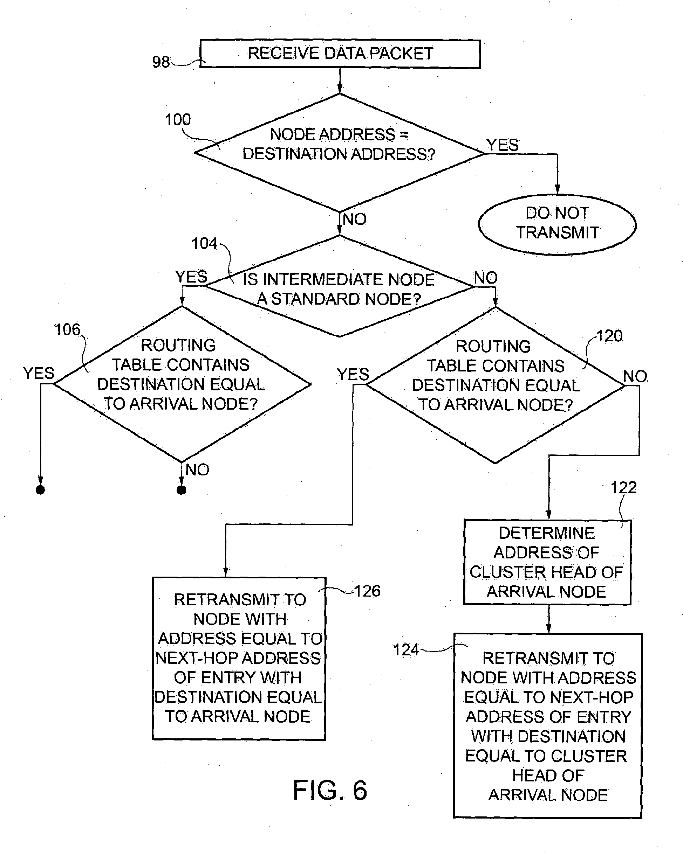

In detail, given a generic starting node that transmits a data packet addressed to an arrival node, and therefore containing a destination address equal to the address of the arrival node, the routing of the data packet takes place as shown in Figure 6, with reference to a generic intermediate node that receives (block 98) the data packet that has been transmitted or retransmitted by a sending node neighbouring the intermediate node and contains a next-hop address equal to the address of the intermediate node.

In greater detail, the intermediate node checks (block 100) if its own address coincides with the destination address contained in the data packet, in which case (YES exit from block 100) the intermediate node coincides with the arrival node and therefore it does not retransmit the data packet. Otherwise, if the address of the intermediate node is different from the destination address contained in the data packet (NO exit from block 100), the intermediate node, which is a multipoint relay of the sending node, checks (block 104) its own role.

If the intermediate node is a standard node ST (YES exit from block 104), it checks (block 106) if there is an entry in its routing table with a destination address equal to the destination address of the data packet, i.e. equal to the address of the arrival node; in a similar manner, the intermediate node checks if the arrival node belongs to its cluster.

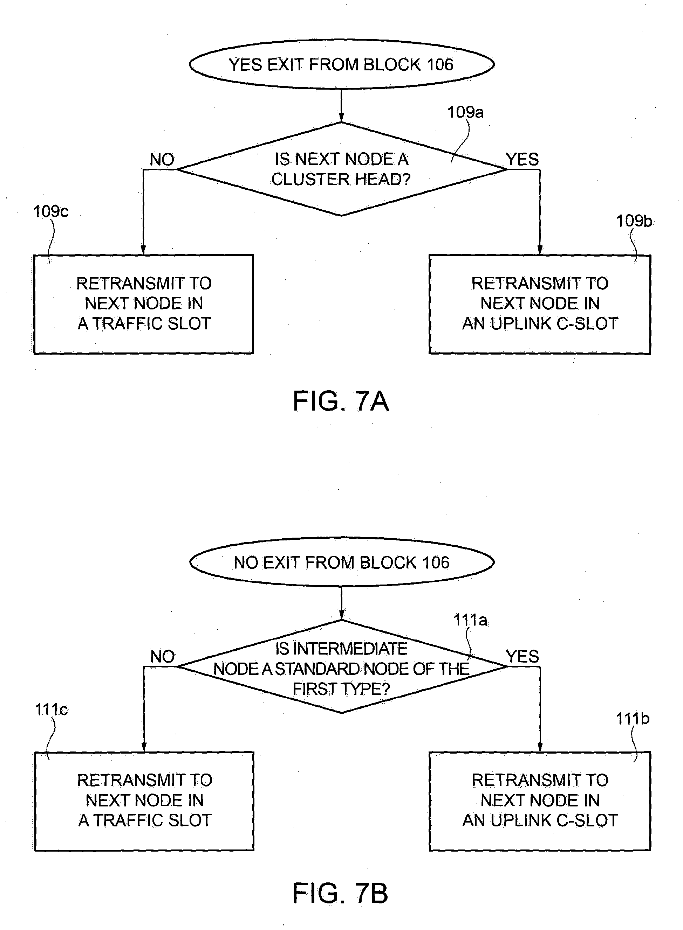

If there is an entry in the routing table of the intermediate node that has a destination address equal to the address of the arrival node (YES exit from block 106), this means that the arrival node is affiliated with the same cluster head CH to which the intermediate node is affiliated, or that the arrival node is the cluster head to which the intermediate node is affiliated. In this case, the intermediate node performs the operations shown in Figure 7a, in order to retransmit the data packet to the node (which will hereinafter be referred to as the next node for brevity) having an address equal to the next-hop address of the entry in the routing table having a destination address equal to the address of the arrival node.

In detail, the intermediate node checks (block 109a) if the next node is a cluster head CH and then, if the next node is a cluster head CH (YES exit from block 109a), retransmits (block 109b) the data packet to the next node in an uplink C-slot S2. Otherwise, if the next node is a standard node ST (NO exit from block 109a), the intermediate node retransmits (block 109c) the data packet to the next node in a traffic slot S1. In both block 109b and block 109c, retransmission takes place with a power level equal to the communication power associated with the next node.

Again with reference to Figure 6, if the intermediate node is a standard node ST and there is no entry in the routing table of the intermediate node having a destination address equal to the address of the arrival node (NO exit from block 106), this means that the arrival node is affiliated with a different cluster head CH from the cluster head to which the intermediate node is affiliated, or it is a different cluster head CH from the cluster head to which the intermediate node is affiliated. In this case, the intermediate node performs the operations shown in Figure 7b in order to retransmit the data packet to the node (which is still referred to as the next node) whose address is equal to the next-hop address of the entry in the routing table having a destination address equal to the address of the cluster head CH of the intermediate node.

In detail, the intermediate node checks (block 111a) whether it is a standard node of the first type ST1. If the intermediate node is a standard node of the first type ST1 (YES exit from block 111a), the intermediate node retransmits (block 111b) the data packet to the next node in an uplink C-slot S2. Otherwise, if the intermediate node is a standard node of the second type ST2 (NO exit from block 111a), the intermediate node retransmits (block 111c) the data packet to the next node in a traffic slot S1. In particular, if the intermediate node is a standard node of the first type ST1, the data packet is retransmitted to the cluster head CH of the intermediate node. Furthermore, in both block 111b and block 111c, retransmission takes place with a power level equal to the communication power associated with the next node.

Again with reference to Figure 6, if the intermediate node is a cluster head (NO exit from block 104), it checks (block 120) if there is an entry in its routing table with a destination address equal to the destination address of the data packet, i.e. equal to the address of the arrival node.

If there is no entry in the routing table of the intermediate node having a destination address equal to the address of the arrival node (NO exit from block 120), this means that the arrival node is affiliated with a cluster head CH different from the intermediate node. In this case, the intermediate node determines (block 122) the address of the cluster head CH to which the arrival node is affiliated, based on the notification packets received. If this last operation is not possible, it means that the network is disconnected.

Afterwards, the intermediate node retransmits (block 124) the data packet to the node having an address equal to the next-hop address of the entry in the routing table having a destination address equal to the address of the cluster head CH of the arrival node. The retransmission takes place in a traffic slot S1 and with a power level equal to the communication power associated with the node having an address equal to the next-hop address of the entry in the routing table having a destination address equal to the address of the cluster head CH of the arrival node.

Finally, if the intermediate node is a cluster head and there is an entry in its routing table with a destination address equal to the address of the arrival node (YES exit from block 120), this means that the arrival node is affiliated with the intermediate node, or that it is a cluster head CH. In this case, the intermediate node retransmits (block 126) the data packet to the node whose address is equal to the next-hop address of the entry in the routing table having a destination address equal to the address of the arrival node. The retransmission has a power level equal to the communication power associated with the node having an address equal to the next-hop address of the entry in the routing table having a destination address equal to the address of the arrival node. Furthermore, the retransmission takes place, alternatively, in a downlink C-slot S3 if the arrival node is affiliated with the intermediate node, or in a traffic slot S1 if the arrival node is a cluster head CH.

Although the operations shown in Figures 6, 7a and 7b make explicit reference to an intermediate node, they are also carried out by any node that first generates a data packet, except for the operations referred to in block 98 and the checking operations referred to in block 100. In this case, the retransmission operations mentioned in blocks 109a, 109b, 111a, 111b, 124 and 126 are replaced by corresponding transmission operations.

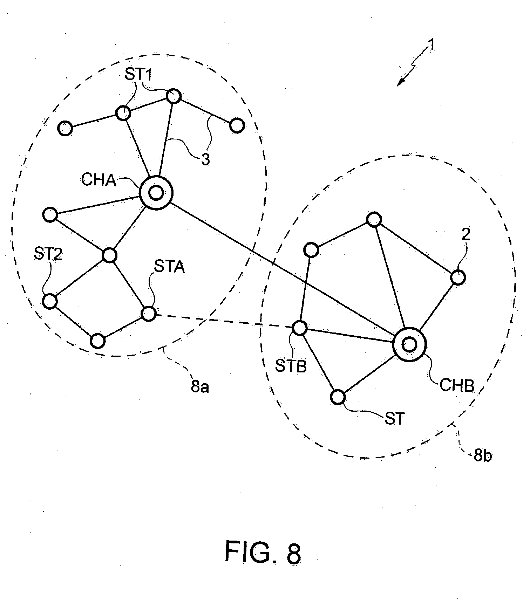

With reference, purely by way of example, to Figure 8, the unicast communications between a first and a second node STA and STB take place in the following manner. It should be noted that the first node STA belongs to a first cluster 8a, is a standard node of the second type and is two hops away from the cluster head (indicated as CHA) of the first cluster 8a, while the second node STB belongs to a second cluster 8b and is a standard node of the first type, and is therefore only one hop away from the cluster head (indicated as CHB) of the second cluster 8b. It is also assumed that inside each of the first and second clusters 8a and 8b, any two neighbouring nodes can communicate directly by using the first power level, and that the cluster heads of the first and second clusters 8a and 8b, can communicate directly by using the second power level.

In detail, the data packet, containing the address of the second node STB, is initially transmitted in unicast mode, with the first power level and in a traffic slot S1, and is received by a standard node of the first type ST1, interposed between the first node STA and the cluster head CHA of the first cluster 8a, which subsequently retransmits it, still with the first power level, and in an uplink C-slot S2, so that the data packet reaches the cluster head CHA.

Afterwards, the first cluster head CHA retransmits the data packet in unicast mode, with the second power level and in a traffic slot S1, so that it is received by the cluster head CHB of the second cluster 8b. The cluster heads CHA and CHB of the first and second clusters 8a and 8b are neighbours and therefore retransmission by intermediate cluster heads does not take place.

The cluster head CHB of the second cluster 8b recognises the second node STB as belonging to its cluster, and therefore retransmits the data packet with the first power level. In particular, the cluster head CHB of the second cluster 8b retransmits the data packet in a downlink C-slot S3, so that the data packet reaches the second node STB.

According to a different embodiment, each cluster head CH updates its own topology and neighbour tables with a lower frequency with respect to that provided for by the OLSR protocol and implemented by the standard nodes ST.

In particular, each cluster head CH processes the HELLO packets in conformity with the OLSR protocol, but, unlike the standard nodes ST, it does not perform the corresponding updates of the set of neighbouring nodes and the set of nodes that are two hops away from the cluster head CH upon each reception of a HELLO packet, but rather with a periodicity at least equal to a first update period and based on all the HELLO packets received during each first update period. In a manner in itself known and in the same way as happens in the case of standard nodes ST, each change to the set of neighbouring nodes and the set of nodes that are two hops away from the cluster head CH can entail modifications to the multipoint relays of the cluster head CH, which are determined on each change to either of these two sets, as well as to the nodes for which the cluster head CH is a multipoint relay.

Each cluster head CH also processes the TC packets in conformity with the OLSR protocol, but, unlike the standard nodes ST, does not carry out the corresponding updates to the topology table after the reception of each TC packet, but rather with a periodicity at least equal to a second update period and based on all the TC packets received during each second update period. The periods of the first and second updates can, for example, be the same. In a manner in itself known and in the same way as happens in the case of standard nodes ST, each change to the topology table of the cluster head CH can entail modifications to the routing table, which is recalculated on each change to the topology table.

According to this embodiment, each cluster head CH preferably transmits TC packets with a lower frequency than that used by the standard nodes ST. In particular, referring to the TC interval to indicate the periodicity with which the nodes 2 transmit TC packets, and assuming that the TC interval of the standard nodes ST is equal to B, an aggregation factor Af is defined. Furthermore, the cluster head CH sets respective TC intervals so that they are equal to Af^{∗}B; for example, Af^{∗}B can be equal to the above-mentioned second update period. In this way, signalling aggregation is achieved, as this communication method contemplates concentration of signal traffic on the cluster heads CH.

In addition, each cluster head CH preferably sets the holding times of its neighbour and topology tables, i.e. the times beyond which entries that are not updated are deleted, so that they are respectively proportional to the times of the first and second update. Furthermore, each cluster head CH sets the so-called duplicate holding time so that it is proportional to the above-mentioned second update time and is, for example, equal to 5^{∗}Af^{∗}B. As previously mentioned, the duplicate holding time is a parameter in itself known, based on which any multipoint relay blocks the retrasmission of TC packets. In fact, given a multipoint relay that receives a TC packet from one of its MPR selectors; the former only retransmits this TC packet if it has not received a TC packet equal to this TC packet in a period prior the reception of this TC packet having a duration equal to the duplicate holding time.

In practice, this embodiment is characterized by less traffic generated by the cluster heads CH and is based on the assumption that, due to the greater stability of the backbone structure, it is effectively possible to reduce the traffic generated by the cluster heads CH and therefore the congestion of the telecommunications network 1, without reducing the quality of the communications.

According to a further embodiment, the standard nodes ST of any cluster 8 can communicate with the standard nodes ST of other clusters 8, provided that they are neighbours.

For example, still with referenced to Figure 8 and assuming that the first and second nodes STA and STB are neighbours and bidirectionally connected, the first node STA can communicate directly with the second node STB, without interposition of the cluster heads CHA and CHB of the first and second clusters 8a and 8b. In particular, the first node STA can determine whether to transmit data packets in unicast mode directly to the second node STB, or to route them towards its cluster head CHA, as previously described. The first node STA can choose between the two routing modes based on, for example, management policies regarding quality of service (QoS) and/or based on the congestion of the backbone structure. For example, in the case where the data packets refer to time critical services, the first node STA selects the routing mode that entails the shortest path.

In order to allow direct routing between neighbouring nodes of different clusters, each standard node ST does not reject TC packets coming from standard nodes ST belonging to clusters other than its own, but processes them and uses the information contained therein, without however retransmitting them. Therefore, the topology and routing tables of each standard node ST can also contain direct routes to standard nodes ST belonging to clusters other than its own, provided that these nodes are neighbours.

In detail, according to this embodiment, the routing table of first node STA also contains an entry having a destination address equal to the address of the second node STB, which is also referred to as the proximity node STB.

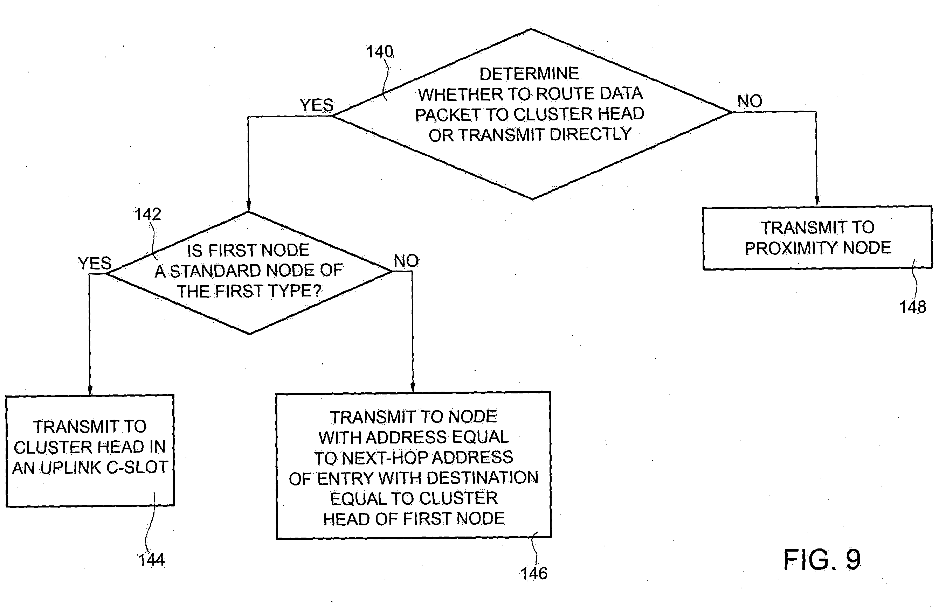

In greater detail, the routing table of the first node STA contains an entry having a destination address and next-hop address both equal to the address of the proximity node STB. Furthermore, in order to communicate with the proximity node STB, the first node STA performs the operations shown in Figure 9.

The first node STA determines (block 140) whether to route the packet to its cluster head CHA, or transmit it directly to the proximity node STB.

In the case where the first node STA selects routing to its cluster head CHA (YES exit from block 140), it checks (block 142) whether it is itself a standard node of the first type ST1.

If the first node STA is a standard node of the first type ST1 (YES exit from block 142), the first node STA transmits (block 144) the data packet to its cluster head CHA in an uplink C-slot S2, with the power level associated with the cluster head CHA.

Otherwise, if the first node STA is a standard node of the second type ST2 (NO exit from block 142), the first node STA transmits (block 146) the data packet to the node (which is referred to hereinafter as the next node) having an address equal to the next-hop address of the entry in the routing table having a destination address equal to the address of the cluster head CHA. Transmission takes place in a traffic slot S1 and with the communication power associated with the next node.

In the case where the first node STA selects direct transmission (NO exit from block 140), the first node STA does not transmits the data packet to the node having an address equal to the next-hop address of the entry in the routing table having a destination address equal to the address of the cluster head to which the first node STA is affiliated, but transmits (block 148) the data packet to the proximity node STB. Transmission takes place with the communication power associated with the proximity node STB and in a communication slot S1.

According to a variant of the embodiment discussed with reference to Figure 9, the data packet can be retransmitted one or more times inside the cluster containing the proximity node, which can therefore be more than one hop away from the standard node ST. In this case, the routing table of the first node STA contains an entry having a destination address equal to the proximity node and a next-hop address equal to the address of a boundary node, this latter node being a neighbour of the first node STA, belonging to the same cluster of the proximity node and being interposed between the first node STA and the proximity node. Therefore, the transmission referred to in block 148 takes place such that the data packet has a destination address equal to the address of the proximity node and a next-hop address equal to the address of the boundary node.

According to this variant, it is still preferable to introduce a mechanism of the so-called time-to-live type, which limits the maximum number of retransmissions to which a TC packet can be subjected within a cluster other than the cluster in which it was generated. The retransmission limitation of the TC packet enables limiting the increase in signal traffic.

According to a further aspect of this communication method and applicable to any of the previously described embodiments, a check is carried out in each cluster 8 on the election of a further cluster head with respect to the cluster head CH, the former being referred to hereinafter as the backup cluster head. For example, the backup cluster head can be the node that neighbours the cluster head CH, is affiliated with the cluster head CH and, after the cluster head CH, has the largest number of neighbours one hop away and affiliated with the cluster head CH. Furthermore, the backup cluster head is selected by the cluster head CH, which notifies this selection to the other nodes of the cluster, for example through the setting of a corresponding flag inside the HELLO packets.

The backup cluster head sets its willingness to the maximum possible value, so as to be elected multipoint relay by its neighbouring nodes, as well as by the same cluster head CH, which is referred to hereinafter as the primary cluster head. In this way, among other things, the backup cluster head retransmits the TC packets transmitted or retransmitted by the primary cluster head.

The nodes that are one hop away from the primary cluster head and are neighbours of the backup cluster head can then have two entries inside their topology tables having the address of the primary cluster head as the destination address. In this case, each of these nodes has two different direct routes towards the outside of the cluster and, in particular, has a first route that passes directly through the primary cluster head, without including the backup cluster head, and a second route that passes through the backup cluster head and the primary cluster head. The first route therefore has the primary cluster head as the next-hop address, while the second route has the backup cluster head as the next-hop address.

The nodes neighbouring the primary cluster head and the backup cluster head are further configured to carry out routing along the first route during periods of time when the primary cluster head operates correctly, and also to carry out routing along the second route during periods of time when the primary cluster head is not active. Switching between the first and second routing modes can take place based on signal packets transmitted by the backup cluster head, after the latter has detected the inactivity of the primary cluster head, for example following detection of a missed transmission of control packets by the primary cluster head for a period of time exceeding a guard time. The guard time is preferably less than the aforementioned holding times of the neighbour and topology tables, so as to enable the backup cluster head to detect inactivity of the primary cluster head and to communicate this situation to the other nodes before the entries in the neighbour and topology and routing tables expire.

According to a further aspect of this communication method, already mentioned in the forgoing and applicable to any of the previously described embodiments, each node 2 is configured to switch between a first operating mode of known type, in conformity with OLSR protocol, and a second operating mode, which operates in conformity with this communication method.

To this end, as shown in Figure 10, each node 2 determines (block 90) :
- the ratio α_{flat} between the number of nodes 2 that belong to the dominating set and the total number of nodes 2 that form the telecommunications network 1; and
- the ratio α₂ₜᵢₑᵣ between the number of cluster heads CH and the total number of nodes 2 that form the telecommunications network 1.

Furthermore, each node 2 determines (block 92) whether to switch operating mode based on the ratios α_{flat} and α₂ₜᵢₑᵣ it has determined. For example, when a node 2 operates in the first operating mode, it switches to the second operating mode if the ratio α_{flat} is lower than a first threshold. Furthermore, when a node 2 operates in the second operating mode, it switches to the first operating mode if the ratio α₂ₜᵢₑᵣ is higher than a second threshold. In this way, considering a network characterized by sparse nodes as being formed by clusters is avoided.

The advantages that can be achieved with this communication method clearly emerge from the foregoing description. In particular, this communication method defines a two-level routing algorithm, whereby each node can alternatively operate as a cluster head or as a standard node. In particular, when a node operates as a standard node, it operates as if it belonged to a so-called flat network, i.e. a non-hierarchical network. Furthermore, all the nodes participate in the management of the network and implement the same control algorithms, similarly to what happens precisely in a flat network.

This communication method contemplates using the backbone structure to enable communication between remote nodes with reduced propagation times, this backbone structure being characterized, due to the greater transmissive power of the cluster heads, by greater stability with respect to the remaining portions of the telecommunications network, and therefore by a lower updating frequency.

This communication method further enables limiting the retransmission of redundant signal traffic within each cluster when this is related to nodes affiliated with other clusters. In addition, the infra-cluster topology is hidden from the other portions of the telecommunications network, guaranteeing a significant reduction in signal packets within the telecommunications network.

In addition, since the reduction of transmission power in a flat network implicates an increase in the number of packets, while an increase in transmission power implicates a denser network, and therefore larger HELLO packets, this communication method enables:
- limiting the number of HELLO packets, because the transmission power level of the standard nodes is basically low; and
- limiting, at the same time, the number of TC packets, due to the signalling aggregation performed by the cluster heads.

Finally, it is clear that modifications and variants can be made to this communication method, without departing from the scope of the present invention, as defined in the appended claims.

For example, the information contained in the tables and in the entries mentioned in the description, as well as inside the control packets, may be organized differently with respect to that described; in addition, part of this information may be absent. For example, during the step of creating the list of neighbouring roles, a node might not have information regarding the roles of one or more of its neighbouring nodes, in which case this information in not inserted in the list of neighbouring roles until it becomes available.

Furthermore, in general and as previously mentioned, the described operations may be carried out in a different order with respect to that described. In particular, some of the operations shown in sequence may be performed substantially at the same time or even in reverse order. Furthermore, some operations are repeated over time.

It is also possible that the association between type of packet and slot is different with respect to that described. For example, it is possible that the TC packets are transmitted/retransmitted in the signalling slots, instead of in the traffic slots.

In addition, it is possible that the structure of the communication frame is different with respect to that indicated. It is possible that the uplink and downlink C-slots are absent, in which case the transmissions between cluster heads and standard nodes of the first type may take place in the traffic slots.

Furthermore, this communication method can also be adopted in the case where the telecommunications nodes are fixed and the network is therefore not of the mobile type.

## Claims

1. A communication method of the Optimized Link State Routing Protocol (OLSR) type for a network (1) including a plurality of nodes (2), each node being equipped with a single interface (I) configured to implement a protocol stack and send packets with a power level in a range between a first and a second power level, said second power level being greater than the first power level; said method comprising the steps, performed by a first node (2), of:
- determining (72), among the neighbouring nodes, a respective set of multipoint relays;
- determining (74), among the neighbouring nodes, the nodes for which the first node is a respective multipoint relay;
- determining (78) a respective routing table, formed by a plurality of entries, each entry comprising a respective destination address, equal to the address of a corresponding destination node, and a respective next-hop address, equal to the address of a connecting node that is one hop away from the first node and is a multipoint relay of the first node, the destination node being connected to the first node through the connecting node; and
- determining (22-54) a respective role between cluster head (CH) and affiliated node (ST), so as to form a plurality of node clusters (8), each cluster comprising a respective cluster head and a set of nodes affiliated with said respective cluster head, each affiliated node being one or more hops away from said respective cluster head;
and wherein said step of forming a respective routing table comprises, by the first node:
- if the first node is a cluster head, storing (78) entries in the routing table containing destination addresses respectively equal to the addresses of the cluster heads different from the first node and the addresses of the nodes affiliated with the first node; and
- if the first node is an affiliated node, storing (78) entries in the routing table containing destination addresses respectively equal to the address of the cluster head with which the first node is affiliated and the addresses of the nodes affiliated with the cluster head with which the first node is affiliated;
said communication method further comprising the step of sending (109a-109b, 111a-111b, 124, 126, 144, 146), by the first node, a first data packet having a respective next-hop address and a respective destination address, the destination address of the first data packet being equal to the address of an arrival node, and wherein:
- if the first node is an affiliated node and the routing table of the first node contains an entry having a destination address equal to the address of the arrival node, the next-hop address of the first data packet is equal to the next-hop address of said entry having a destination address equal to the address of the arrival node;
- if the first node is an affiliated node and the routing table of the first node does not contain any entry having a destination address equal to the address of the arrival node, the next-hop address of the first data packet is equal to the next-hop address of the routing table entry of the first node having a destination address equal to the address of the cluster head with which the first node is affiliated;
- if the first node is a cluster head and the routing table of the first node contains an entry having a destination address equal to the address of the arrival node, the next-hop address of the first data packet is equal to the next-hop address of said entry having a destination address equal to the address of the arrival node; and
- if the first node is a cluster head and the routing table of the first node does not contain any entry having a destination address equal to the address of the arrival node, the next-hop address of the first data packet is equal to the next-hop address of the routing table entry of the first node having a destination address equal to the address of the cluster head with which the arrival node is affiliated;
said communication method further comprising the step of defining (20) a communication frame (10) formed by a plurality of communication slots (12), and wherein said step of sending (109a-109b, 111a-111b, 124, 126, 144, 146) a first data packet comprises:
- if the first node is a cluster head (CH) and the routing table of the first node contains an entry having a destination address equal to the address of the arrival node, and the arrival node is an affiliated node, multiplexing (126) the sending of the first data packet with the sending, by the first node, of at least a second data packet in a same first communication slot (S3), said second data packet containing a next-hop address different from the next-hop address of said first data packet;
- if the first node is affiliated with a cluster head that is one hop away and the next-hop address of said first data packet is equal to the address of the cluster head with which the first node is affiliated, cooperating with at least a second node affiliated with the cluster head with which the first node is affiliated, so as to multiplex (109b, 111b) the sending of the first data packet with the sending, by the second node, of a third data packet, in a same second communication slot (S2), the third data packet containing a next-hop address equal to the address of the cluster head with which the first node is affiliated.

2. The communication method according to claim 1, further comprising, by the first node (2), the step of determining (60), for each next-hop address stored in the respective routing table, a corresponding communication power equal to the minimum power such that a packet sent by the first node is received by the node having an address equal to said next-hop address; and wherein said step of sending (109a-109b, 111a-111b, 124, 126, 144, 146) a first data packet comprises sending the first data packet with a power level equal to the communication power corresponding to the next-hop address of the first data packet.

3. The communication method according to claim 1 or 2, wherein said step of determining (22-54) a respective role comprises, by the first node (2), performing the steps of:
- transmitting (26, 44), with the second power level, neighbourhood control packets (HELLO);
- receiving (27, 45) neighbourhood control packets transmitted by nodes neighbouring the first node;
- determining (28) a set of addresses of neighbouring nodes, based on the received neighbourhood control packets, the neighbourhood control packets transmitted by the first node being configured to contain the set of addresses of neighbouring nodes determined by the first node; and
- checking (30) whether two neighbouring nodes of the first node exist that are not linked to each other;
said communication method further comprising, by the first node, forming (40) a dominating set of the network (1), if two neighbouring nodes exist that are not linked to each other; and wherein said step of determining (22-54) a respective role is performed as a function of whether or not the first node forms the dominating set.

4. The communication method according to claim 3, wherein said step of transmitting (44) neighbourhood control packets (HELLO) comprises inserting an indication of the role of the first node in each neighbourhood control packet; and wherein said step of determining (22-54) a respective role comprises assuming (34), by the first node, the role of affiliated node, if no two nodes neighbouring the first node exist that are not linked to each other; and wherein said step of determining (22-54) a respective role further comprises, if two nodes neighbouring the first node exist that are not linked to each other, performing, by the first node, the steps of:
- assuming (22) the role of affiliated node;
- creating (46) a list of neighbour roles, including the roles of the nodes neighbouring the first node, based on the received neighbourhood control packets;
- communicating (48) the roles of the nodes neighbouring the first node to the neighbouring nodes;
- learning (49) the roles of the nodes neighbouring the nodes neighbouring the first node;
- checking (50) if the set of addresses of neighbouring nodes determined by the first node is included in the set of addresses of neighbouring nodes determined by a cluster head (CH), or is included in the union of the sets of addresses of neighbouring nodes determined by two cluster heads (CH) and the first node has an address that respects a predetermined relation with the addresses of said two cluster heads; and
- assuming (52) the role of cluster head, if the set of addresses of neighbouring nodes determined by the first node is not included in the set of addresses of neighbouring nodes determined by a cluster head, or is included in the union of the sets of addresses of neighbouring nodes determined by two cluster heads, but the first node has an address that does not respect said predetermined relation with the addresses of said two cluster heads; otherwise
- maintaining (54) the role of affiliated node, if the set of addresses of neighbouring nodes determined by the first node is included in the set of addresses of neighbouring nodes determined by a cluster head, or is included in the union of the sets of addresses of neighbouring nodes determined by two cluster heads and the first node has an address that respects said predetermined relation with the addresses of said two cluster heads.

5. The communication method according to any of the preceding claims, further comprising, if the first node (2) is a cluster head (CH), determining (53b), by the first node, a list of addresses of nodes affiliated with it and communicating (53c) said list of affiliated nodes to the other cluster heads (CH).

6. The communication method according to any of the preceding claims, further comprising, by the first node (2), performing the steps of:
- receiving (block 98) an incoming data packet, sent by a sending node neighbouring the first node and having a destination address equal to an end node address and a next-hop address equal to the address of the first node; and
- performing said step of sending (109a-109b, 111a-111b, 124, 126) a first data packet such that said first data packet has a destination address equal to the address of the end node, so as to retransmit the incoming data packet.

7. The communication method according to any of the preceding claims, further comprising, by the first node (2), performing the steps of:
- transmitting (76) at least one topology control packet (TC) containing the addresses of the nodes for which the first node is a multipoint relay; and
- receiving (77) topology control packets sent by nodes neighbouring the first node;
said communication method further comprising, for each received topology control packet, performing, by the first node, the steps of:
- if the first node is a cluster head, retransmitting the received topology control packet, if said topology control packet has been sent by a node for which the first node is a respective multipoint relay and has been originated either by a cluster head or by a node affiliated with the first node; and
- if the first node is an affiliated node, retransmitting the received topology control packet, if said topology control packet has been sent by a node for which the first node is a respective multipoint relay and has been originated either by the cluster head with which the first node is affiliated, or by a node affiliated with the same cluster head with which the first node is affiliated;
and wherein the step of determining (78) a respective routing table comprises determining said routing table based on the received topology control packets.

8. The communication method according to claim 7, when dependent on claim 3 or 4, further comprising the step of determining, by the first node, a set of nodes that are two hops away from the first node, based on the received neighbourhood control packets; and wherein said step of determining (72) a respective set of multipoint relays is performed based on the set of addresses of neighbouring nodes determined by the first node and based on the set of nodes that are two hops away from the first node; and wherein said step of transmitting (26, 44) neighbourhood control packets (HELLO) comprises inserting the set of multipoint relays determined by the first node in said neighbourhood control packets, said step of determining (74) the nodes for which the first node is a multipoint relay being performed based on neighbourhood control packets received by the first node; and wherein said step of determining (28) a set of addresses of neighbouring nodes comprises:
- if the first node is a cluster head, updating, by the first node, the set of addresses of neighbouring nodes and the set of nodes that are two hops away with a periodicity at least equal to a first predetermined period of time, based on the neighbourhood control packets received during said first predetermined period of time;
- if the first node is an affiliated node, updating, by the first node, the set of addresses of neighbouring nodes and the set of nodes that are two hops away, on each reception of a neighbourhood control packet;
and wherein the step of determining (78) a respective routing table comprises:
- if the first node is a cluster head, updating the routing table with a periodicity at least equal to a second predetermined period of time, based on the topology control packets received during said second predetermined period of time;
- if the first node is an affiliated node, updating the routing table on each reception of a topology control packet.

9. The communication method according to any of the preceding claims, wherein said step of determining (72), among the neighbouring nodes, a respective set of multipoint relays is performed in a manner such that, if the first node is a cluster head (CH), the first node is a multipoint relay of the nodes affiliated with the first node and neighbouring the first node, and of the cluster heads neighbouring the first node.

10. The communication method according to any of the preceding claims, wherein said step of determining (78) a respective routing table comprises, by the first node (2):
- if the first node (STA) is an affiliated node, storing (78) at least one entry in the routing table containing a destination address equal to the address of a proximity node (STB) affiliated with a cluster head (CHB) different from the cluster head (CHA) with which the first node is affiliated, said entry containing a next-hop address equal to the address of a boundary node (STB) neighbouring the first node and affiliated with said cluster head (CHB) different from the cluster head (CHA) with which the first node is affiliated; said method further comprising the steps of, by the first node:
- determining (140) whether to route the first data packet towards the cluster head with which the first node is affiliated or towards the boundary node; and
- if the first node has determined to route the first data packet towards the cluster head with which the first node is affiliated, performing said step of sending (144, 146) the first data packet such that said first data packet has a destination address equal to the address of the proximity node; and
- if first node has determined to route the first data packet towards the boundary node, preventing said step of sending the first data packet from being performed and transmitting (148) a direct packet, having a destination address equal to the address of the proximity node and next-hop address equal to the address of the boundary node.

11. The communication method according to any of the preceding claims, wherein said step of sending (109a-109b, 111a-111b, 124, 126, 144, 146) a first data packet comprises, by the first node:
- if the first node is an affiliated node (ST2) and is more than one hop away from the cluster head (CH) with which it is affiliated, cooperating with the other nodes affiliated with the cluster head with which the first node is affiliated, so as to send the first data packet without multiplexing;
- if the first node is a cluster head and the routing table of the first node does not contain any entry having a destination address equal to the address of the arrival node, or if the first node is a cluster head and the routing table of the first node contains an entry having a destination address equal to the address of the arrival node, which is a cluster head, cooperating with the other cluster heads so as to send the first data packet without multiplexing.

12. The communication method according to any of the preceding claims, further comprising, by the first node:
- if the first node is a cluster head (CH), selecting a backup cluster head from among the nodes neighbouring the first node and affiliated with the first node;
and wherein said step of forming a respective routing table comprises, by the first node:
- if the first node is an affiliated node and is one hop away from the respective cluster head (CH) and the backup cluster head, storing (78) in the routing table an entry containing a destination address equal to the address of the cluster head with which the first node is affiliated and a next-hop address equal to the address of the corresponding backup cluster head, and an entry in which the destination and next-hop addresses are both equal to the address of the cluster head with which the first node is affiliated;
said method further comprising, if the first node neighbours the cluster head with which it is affiliated and the corresponding backup cluster head:
- if the routing table of the first node does not contain any entry having a destination address equal to the address of the arrival node, setting the next-hop address of the first data packet equal to:
- the address of the cluster head with which the first node is affiliated, if the cluster head with which the first node is affiliated is active; or
- the address of the backup cluster head selected by the cluster head with which the first node is affiliated, if the cluster head with which the first node is affiliated is not active.

13. A node for a telecommunications network (1), configured to implement the communication method according to any of the preceding claims.

14. A software product that can be loaded in a memory of a node for a telecommunications network (1) and configured to implement, when executed, the communication method according to any of claims 1 to 12.

15. A mobile telecommunications network (1) comprising a plurality of nodes according to claim 13.

## Patentansprüche

1. Kommunikationsverfahren des Optimized Link State Routing Protokolltyps (OLSR) für ein Netzwerk (1), das eine Vielzahl von Knoten (2) aufweist, wobei jeder Knoten mit einer einzelnen Schnittstelle (I) ausgestattet ist, die so konfiguriert ist, dass sie einen Protokollstapel implementiert und Pakete mit einem Energieniveau in einem Bereich zwischen einem ersten und einem zweiten Energieniveau sendet, wobei das zweite Energieniveau größer als das erste Energieniveau ist; wobei das Verfahren die folgenden Schritte, die durch einen ersten Knoten (2) durchgeführt werden, aufweist:
- Bestimmen (72), unter den benachbarten Knoten, eines entsprechenden Satzes von Multipoint-Relais;
- Bestimmen (74), unter den benachbarten Knoten, des Knotens, für den der erste Knoten ein entsprechendes Multipoint-Relais ist;
- Bestimmen (78) einer entsprechenden Routingtabelle, die durch eine Vielzahl von Einträgen gebildet wird, wobei jeder Eintrag eine entsprechende Zieladresse, die gleich der Adresse eines entsprechenden Zielknotens ist, und eine entsprechende Adresse des nächsten Hops, die gleich der Adresse eines Verbindungsknotens ist, der einen Hop vom ersten Knoten entfernt ist und ein Multipoint-Relais des ersten Knotens ist, aufweist, wobei der Zielknoten mit dem ersten Knoten durch den Verbindungsknoten verbunden ist; und
- Bestimmen (22-54) einer entsprechenden Rolle zwischen Cluster-Head (CH) und angeschlossenem Knoten (ST), um eine Vielzahl von Knotenclustern (8) zu bilden, wobei jeder Cluster einen entsprechenden Cluster-Head und einen Satz von Knoten, der an dem entsprechenden Cluster-Head angeschlossen ist, aufweist, wobei jeder angeschlossene Knoten einen oder mehrere Hops vom entsprechenden Cluster-Head entfernt ist;
und wobei der Schritt zum Bilden einer entsprechenden Routingtabelle, durch den ersten Knoten, aufweist:
- falls der erste Knoten ein Cluster-Head ist, Speichern (78) von Einträgen in der Routingtabelle, die Zieladressen, die jeweils gleich den Adressen der Cluster-Heads sind, die unterschiedlich zum ersten Knoten sind, und die Adressen der Knoten, die am ersten Knoten angeschlossen sind, aufweisen; und
- falls der erste Knoten ein angeschlossener Knoten ist, Speichern (78) von Einträgen in der Routingtabelle, die Zieladressen, die jeweils gleich der Adresse des Cluster-Heads ist, an den der Knoten angeschlossen ist, und die Adressen der Knoten, die am Cluster-Head angeschlossen sind, an dem der erste Knoten angeschlossen ist, aufweisen;
wobei das Kommunikationsverfahren ferner den Schritt zum Senden (109a-109b, 111a-111b, 124, 126, 144, 146), durch den ersten Knoten, eines ersten Datenpakets aufweist, das eine entsprechende Adresse des nächsten Hops und eine entsprechende Zieladresse aufweist, wobei die Zieladresse des ersten Datenpakets gleich der Adresse eines Ankunftknotens ist, und wobei:
- falls der erste Knoten ein angeschlossener Knoten ist und die Routingtabelle des ersten Knotens einen Eintrag aufweist, der eine Zieladresse aufweist, die gleich der Adresse des Ankunftknotens ist, die Adresse des nächsten Hops des ersten Datenpakets gleich der Adresse des nächsten Hops des Eintrags ist, der eine Zieladresse aufweist, die gleich der Adresse des Ankunftknotens ist;
- falls der erste Knoten ein angeschlossener Knoten ist und die Routingtabelle des ersten Knotens irgendeinen Eintrag nicht aufweist, der eine Zieladresse aufweist, die gleich der Adresse des Ankunftknotens ist, die Adresse des nächsten Hops des ersten Datenpakets gleich der Adresse des nächsten Hops des Routingtabelleneintrags des ersten Knotens ist, der eine Zieladresse aufweist, die gleich der Adresse des Cluster-Heads ist, an dem der erste Knoten angeschlossen ist;
- falls der erste Knoten ein Cluster-Head ist und die Routingtabelle des ersten Knotens einen Eintrag aufweist, der eine Zieladresse aufweist, die gleich der Adresse des Ankunftknotens ist, die Adresse des nächsten Hops des ersten Datenpakets gleich der Adresse des nächsten Hops des Eintrags ist, der eine Zieladresse aufweist, die gleich der Adresse des Ankunftknotens ist; und
- falls der erste Knoten ein Cluster-Head ist und die Routingtabelle des ersten Knotens irgendeinen Eintrag nicht aufweist, der eine Zieladresse aufweist, die gleich der Adresse des Ankunftknotens ist, die Adresse des nächsten Hops des ersten Datenpakets gleich der Adresse des nächsten Hops des Routingtabelleneintrags des ersten Knotens ist, der eine Zieladresse aufweist, die gleich der Adresse des Cluster-Heads ist, an dem der Ankunftknoten angeschlossen ist;
wobei das Kommunikationsverfahren ferner den Schritt zum Definieren (20) eines Kommunikationsrahmens (10) aufweist, der durch eine Vielzahl von Kommunikationszeitfenstern (12) gebildet wird, und wobei der Schritt zum Senden (109a-109b, 111a-111b, 124, 126, 144, 146) eines ersten Datenpakets aufweist:
- falls der erste Knoten ein Cluster-Head (CH) ist und die Routingtabelle des ersten Knotens einen Eintrag aufweist, der eine Zieladresse aufweist, die gleich der Adresse des Ankunftsknotens ist, und der Ankunftknoten ein angeschlossener Knoten ist, Multiplexen (126) des Sendens des ersten Datenpakets beim Senden, durch den ersten Knoten, von mindestens einem zweiten Datenpaket in einem selben ersten Kommunikationszeitfenster (S3), wobei das zweite Datenpaket eine Adresse des nächsten Hops aufweist, die unterschiedlich zur Adresse des nächsten Hops des ersten Datenpakets ist;
- falls der erste Knoten an einem Cluster-Head angeschlossen ist, der einen Hop entfernt ist, und die Adresse des nächsten Hops des ersten Datenpakets gleich der Adresse des Cluster-Heads ist, an dem der erste Knoten angeschlossen ist, Zusammenwirken mit mindestens einem zweiten Knoten, der am Cluster-Head angeschlossen ist, an dem der erste Knoten angeschlossen ist, um das Senden des ersten Datenpakets beim Senden, durch den zweiten Knoten, eines dritten Datenpakets, in einem selben zweiten Kommunikationszeitfenster (S2) zu multiplexen (109b, 111b), wobei das dritte Datenpaket eine Adresse des nächsten Hops aufweist, die gleich der Adresse des Cluster-Heads ist, an dem der Knoten angeschlossen ist.

2. Kommunikationsverfahren gemäß Anspruch 1, das ferner aufweist, durch den ersten Knoten (2), den Schritt zum Bestimmen (60), für jede Adresse des nächsten Hops, die in der entsprechenden Routingtabelle gespeichert ist, einer entsprechenden Kommunikationsenergie, die gleich einer minimalen Energie ist, so dass ein Paket, das durch den ersten Knoten gesendet wird, durch den Knoten empfangen wird, der eine Adresse aufweist, die gleich der Adresse des nächsten Hops ist; und wobei der Schritt zum Senden (109a-109b, 111a-111b, 124, 126, 144, 146) eines ersten Datenpakets ein Senden des ersten Datenpakets mit einem Energieniveau aufweist, das gleich der Kommunikationsenergie ist, die der Adresse des nächsten Hops des ersten Datenpakets entspricht.

3. Kommunikationsverfahren gemäß Anspruch 1 oder 2, wobei der Schritt zum Bestimmen (22-54) einer entsprechenden Rolle, durch den ersten Knoten (2), ein Durchführen der Schritte aufweist:
- Übertragen (26, 44), mit dem zweiten Energieniveau, von Nachbarschafts-Kontrollpaketen (HELLO);
- Empfangen (27, 45) von Nachbarschafts-Kontrollpaketen, die durch Knoten übertragen werden, die zum ersten Knoten benachbart sind;
- Bestimmen (28) eines Satzes von Adressen von benachbarten Knoten, auf Grundlage der empfangenen Nachbarschafts-Kontrollpakete, wobei die Nachbarschafts-Kontrollpakete, die durch den ersten Knoten übertragen werden, so konfiguriert sind, dass sie den Satz von Adressen von benachbarten Knoten, bestimmt durch den ersten Knoten, aufweisen; und
- Überprüfen (30), ob zwei benachbarte Knoten des ersten Knotens vorhanden sind, die nicht miteinander verbunden sind;
wobei das Kommunikationsverfahren ferner, durch den ersten Knoten, Bilden (40) eines dominanten Satzes des Netzwerks (1) aufweist, falls zwei benachbarte Knoten vorhanden sind, die nicht miteinander verbunden sind; und wobei der Schritt zum Bestimmen (22-54) einer entsprechenden Rolle als eine Funktion, ob der erste Knoten den dominierenden Satz bildet oder nicht, durchgeführt wird.

4. Kommunikationsverfahren gemäß Anspruch 3, wobei der Schritt zum Übertragen (44) von Nachbarschafts-Kontrollpaketen (HELLO) ein Einfügen einer Angabe der Rolle des ersten Knotens in jedes Nachbarschafts-Kontrollpaket aufweist; und wobei der Schritt zum Bestimmen (22-54) einer entsprechenden Rolle ein Annehmen (34), durch den ersten Knoten, der Rolle eines angeschlossenen Knotens aufweist, falls keine zwei Knoten, die zum ersten Knoten benachbart sind, vorhanden sind, die nicht miteinander verbunden sind; und wobei der Schritt zum Bestimmen (22-54) einer entsprechenden Rolle ferner, falls zwei Knoten, die zum ersten Knoten benachbart sind, vorhanden sind, die nicht miteinander verbunden sind, ein Durchführen, durch den ersten Knoten, der folgenden Schritte aufweist:
- Annehmen (22) der Rolle von angeschlossenen Knoten;
- Erzeugen (46) einer Liste von Nachbarrollen, die die Rollen der Knoten aufweist, die zum ersten Knoten benachbart sind, auf Grundlage der empfangenen Nachbarschafts-Kontrollpakete;
- Kommunizieren (48) der Rollen der Knoten, die zum ersten Knoten benachbart sind, zu den benachbarten Knoten;
- Lernen (49) der Rollen der Knoten, die zu den Knoten benachbart sind, die zum ersten Knoten benachbart sind;
- Überprüfen (50), ob der Satz von Adressen von benachbarten Knoten, bestimmt durch den ersten Knoten, in dem Satz von Adressen von benachbarten Knoten, bestimmt durch einen Cluster-Head (CH), vorhanden ist, oder im Zusammenschluss von Sätzen von Adressen von benachbarten Knoten, bestimmt durch zwei Cluster-Heads (CH), vorhanden ist und der erste Knoten eine Adresse aufweist, die eine vorgegebene Beziehung zwischen den Adressen der zwei Cluster-Heads berücksichtigt; und
- Annehmen (52) der Rolle eines Cluster-Heads, falls der Satz von Adressen von benachbarten Knoten, bestimmt durch den ersten Knoten, in dem Satz von Adressen von benachbarten Knoten, bestimmt durch einen Cluster-Head, nicht vorhanden ist, oder im Zusammenschluss von den Sätzen von Adressen von benachbarten Knoten, bestimmt durch zwei Cluster-Heads, vorhanden ist, aber der erste Knoten eine Adresse aufweist, die die vorgegebene Beziehung zwischen den Adressen der zwei Cluster-Heads nicht berücksichtigt; andernfalls
- Beibehalten (54) der Rolle von angeschlossenen Knoten, falls der Satz von Adressen von benachbarten Knoten, bestimmt durch den ersten Knoten, im dem Satz von Adressen von benachbarten Knoten, bestimmt durch einen Cluster-Head, vorhanden ist, oder im Zusammenschluss der Sätze von Adressen von benachbarten Knoten, bestimmt durch zwei Cluster-Heads, vorhanden ist und der erste Knoten eine Adresse aufweist, die die vorgegebene Beziehung zwischen den Adressen der zwei Cluster-Heads berücksichtigt.

5. Kommunikationsverfahren gemäß einem der vorhergehenden Ansprüche, das ferner aufweist, falls der erste Knoten (2) ein Cluster-Head (CH) ist, Bestimmen (53b), durch den ersten Knoten, einer Liste von Adressen von Knoten, die an ihm angeschlossen sind, und Kommunizieren (53c) der Liste von angeschlossenen Knoten zu den anderen Cluster-Heads (CH).

6. Kommunikationsverfahren gemäß einem der vorhergehenden Ansprüche, das ferner, durch den ersten Knoten (2), ein Durchführen der folgenden Schritte aufweist:
- Empfangen (Block 98) eines eingehenden Datenpakets, das durch einen Sendeknoten gesendet wird, der zum ersten Knoten benachbart ist, und eine Zieladresse, die gleich einer Endknotenadresse ist, und eine Adresse des nächsten Hops, die gleich der Adresse des ersten Knotens ist, aufweist; und
- Durchführen des Schritts zum Senden (109a-109b, 111a-111b, 124, 126) eines ersten Datenpakets, so dass das erste Datenpaket eine Zieladresse aufweist, die gleich der Adresse des Endknotens ist, um das eingehende Datenpaket erneut zu senden.

7. Kommunikationsverfahren gemäß einem der vorhergehenden Ansprüche, das ferner ein Durchführen, durch den ersten Knoten (2), der folgenden Schritte aufweist:
- Übertragen (76) mindestens eines Topologiekontrollpakets (TO), das die Adressen der Knoten aufweist, für die der erste Knoten ein Multipoint-Relais ist; und
- Empfangen (77) eines Topologiekontrollpakets, das durch den Knoten gesendet wird, der zum ersten Knoten benachbart ist;
wobei das Kommunikationsverfahren ferner, für jedes empfangene Topologiekontrollpaket, ein Durchführen, durch den ersten Knoten, der folgenden Schritte aufweist:
- falls der erste Knoten ein Cluster-Head ist, erneutes Übertragen des empfangenen Topologiekontrollpakets, falls das Topologiekontrollpaket durch einen Knoten gesendet wurde, für den der erste Knoten ein entsprechendes Multipoint-Relais ist, und entweder von einem Cluster-Head oder von einem Knoten, der an den ersten Knoten angeschlossen ist, stammt; und
- falls der erste Knoten ein angeschlossener Knoten ist, erneutes Übertragen des empfangenen Topologiekontrollpakets, falls das Topologiekontrollpaket durch einen Knoten gesendet wurde, für den der erste Knoten ein entsprechendes Multipoint-Relais ist, und entweder von einem Cluster-Head, an dem der erste Knoten angeschlossen ist, oder von einem Knoten, der an demselben Cluster-Head angeschlossen ist, an dem der erste Knoten angeschlossen ist, stammt;
und wobei der Schritt zum Bestimmen (78) einer entsprechenden Routingtabelle ein Bestimmen der Routingtabelle auf Grundlage der empfangenen Topologiekontrollpakete aufweist.

8. Kommunikationsverfahren gemäß Anspruch 7, wenn er von Anspruch 3 oder 4 abhängig ist, das ferner den Schritt zum Bestimmen, durch den ersten Knoten, eines Satzes von Knoten, die zwei Hops vom ersten Knoten entfernt sind, auf Grundlage der empfangenen Nachbarschafts-Kontrollpakete aufweist; und wobei der Schritt zum Bestimmen (72) eines entsprechenden Satzes von Multipoint-Relais auf Grundlage des Satzes von Adressen von benachbarten Knoten, bestimmt durch den ersten Knoten, und auf Grundlage des Satzes von Knoten, die zwei Hops vom ersten Knoten entfernt sind, durchführt wird; und wobei der Schritt zum Übertragen (26, 44) von Nachbarschafts-Kontrollpaketen (HELLO) ein Einfügen des Satzes von Multipoint-Relais, bestimmt durch den ersten Knoten, in die Nachbarschafts-Kontrollpakete aufweist, wobei der Schritt zum Bestimmen (74) des Knotens, für den der erste Knoten ein Multipoint-Relais ist, auf Grundlage von Nachbarschafts-Kontrollpaketen durchgeführt wird, die durch den ersten Knoten empfangen werden; und wobei der Schritt zum Bestimmen (28) eines Satzes von Adressen von benachbarten Knoten aufweist:
- falls der Knoten ein Cluster-Head ist, Aktualisieren, durch den ersten Knoten, des Satzes von Adressen von benachbarten Knoten und des Satzes von Knoten, die zwei Hops mit einer Periodizität entfernt sind, die mindestens gleich einem ersten vorgegebenen Zeitraum ist, auf Grundlage der Nachbarschafts-Kontrollpakete, die während des ersten vorgegebenen Zeitraums empfangen werden;
- falls der erste Knoten ein angeschlossener Knoten ist, Aktualisieren, durch den ersten Knoten, des Satzes von Adressen von benachbarten Knoten und des Satzes von Knoten, der zwei Hops entfernt sind, bei jedem Empfangen eines Nachbarschafts-Kontrollpakets;
und wobei der Schritt zum Bestimmen (78) einer entsprechenden Routingtabelle aufweist:
- falls der erste Knoten ein Cluster-Head ist, Aktualisieren der Routingtabelle mit einer Periodizität, die mindestens gleich einem zweiten vorgegebenen Zeitraum ist, auf Grundlage des Topologiekontrollpakets, das während des zweiten vorgegebenen Zeitraums empfangen wird;
- falls der Knoten ein angeschlossener Knoten ist, Aktualisieren der Routingtabelle bei jedem Empfangen eines Topologiekontrollpakets.

9. Kommunikationsverfahren gemäß einem der vorhergehenden Ansprüche, wobei der Schritt zum Bestimmen (72), unter den benachbarten Knoten, eines entsprechenden Satzes von Multipoint-Relais in einer Art und Weise durchgeführt wird, so dass, falls der erste Knoten ein Cluster-Head (CH) ist, der erste Knoten ein Multipoint-Relais der Knoten, die an dem ersten Knoten angeschlossen sind und zum ersten Knoten benachbart sind, und des Cluster-Heads ist, der zum ersten Knoten benachbart ist.

10. Kommunikationsverfahren gemäß einem der vorhergehenden Ansprüche, wobei der Schritt zum Bestimmen (78) einer entsprechenden Routingtabelle, durch den ersten Knoten (2), aufweist:
- falls der erste Knoten (STA) ein angeschlossener Knoten ist, Speichern (78) mindestens eines Eintrags in der Routingtabelle, der eine Zieladresse aufweist, die gleich der Adresse eines Umgebungsknotens (STB) ist, der an einem Cluster-Head (CHB) angeschlossen ist, der unterschiedlich zu dem Cluster-Head (CHA) ist, an dem der erste Knoten angeschlossen ist, wobei der Eintrag eine Adresse des nächsten Hops aufweist, die gleich der Adresse eines Grenzknoten (STB) ist, der zum ersten Knoten benachbart ist und an dem Cluster-Head (CHB) angeschlossen ist, der unterschiedlich zu dem Cluster-Head (CHA) ist, an dem der erste Knoten angeschlossen ist;
wobei das Verfahren ferner die folgenden Schritte, durch den ersten Knoten, aufweist:
- Bestimmen (140), ob das erste Datenpaket in Richtung des Cluster-Heads, an dem der erste Knoten angeschlossen ist, oder in Richtung des Grenzknotens zu routen ist; und
- falls der erste Knoten bestimmt hat, das erste Datenpaket in Richtung des Cluster-Heads zu routen, an dem der erste Knoten angeschlossen ist, Durchführen des Schritts zum Senden (144, 146) des ersten Datenpakets, so dass das erste Datenpaket eine Zieladresse aufweist, die gleich der Adresse des Umgebungsknotens ist; und
- falls der erste Knoten bestimmt hat, das erste Datenpaket in Richtung des Grenzknotens zu routen, Vermeiden, dass der Schritt zum Senden des ersten Datenpakets durchgeführt wird, und Übertragen (148) eines direkten Pakets, das eine Zieladresse, die gleich der Adresse des Umgebungsknotens ist, und eine Adresse des nächsten Hops, die gleich der Adresse des Grenzknotens ist, aufweist.

11. Kommunikationsverfahren gemäß einem der vorhergehenden Ansprüche, wobei der Schritt zum Senden (109a-109b, 111a-111b, 124, 126, 144, 146) eines ersten Datenpakets, durch den ersten Knoten, aufweist:
- falls der erste Knoten ein angeschlossener Knoten (ST2) ist und weiter als ein Hop vom Cluster-Head (CH) entfernt ist, an dem er angeschlossen ist, Zusammenwirken mit den anderen Knoten, die am Cluster-Head angeschlossen sind, an dem der erste Knoten angeschlossen ist, um das erste Datenpaket ohne Multiplexen zu senden;
- falls der erste Knoten ein Cluster-Head ist und die Routingtabelle des ersten Knotens irgendeinen Eintrag nicht aufweist, der eine Zieladresse aufweist, die gleich der Adresse des Ankunftsknotens ist, oder falls der Knoten ein Cluster-Head ist und die Routingtabelle des ersten Knotens irgendeinen Eintrag aufweist, der eine Zieladresse aufweist, die gleich der Adresse des Ankunftsknotens ist, der ein Cluster-Head ist, Zusammenwirken mit den anderen Cluster-Heads, um das erste Datenpaket ohne Multiplexen zu senden.

12. Kommunikationsverfahren gemäß einem der vorhergehenden Ansprüche, das ferner, durch den ersten Knoten, aufweist:
- falls der erste Knoten ein Cluster-Head (CH) ist, Auswählen eines Backup-Cluster-Heads aus den Knoten, die zum ersten Knoten benachbart sind und an dem ersten Knoten angeschlossen sind;
und wobei der Schritt zum Bilden einer entsprechenden Routingtabelle, durch den ersten Knoten, aufweist:
- falls der erste Knoten ein angeschlossener Knoten ist und einen Hop vom entsprechenden Cluster-Head (CH) und dem Backup-Cluster-Head entfernt ist, Speichern (78) in der Routingtabelle eines Eintrags, der eine Zieladresse, die gleich der Adresse des Cluster-Heads, an dem der erste Knoten angeschlossen ist, und eine Adresse des nächsten Hops, die gleich der Adresse des entsprechenden Backup-Cluster-Heads ist, aufweist, und eines Eintrags, in dem das Ziel und eine Adresse des nächsten Hopses beide gleich der Adresse des Cluster-Heads sind, an dem der erste Knoten angeschlossen ist;
wobei das Verfahren ferner aufweist, falls der erste Knoten zum Cluster-Head, an dem er angeschlossen ist, und dem entsprechenden Backup-Cluster-Head benachbart ist:
- falls die Routingtabelle des ersten Knotens irgendeinen Eintrag nicht aufweist, der eine Zieladresse aufweist, die gleich der Adresse des Ankunftsknotens ist, Festlegen der Adresse des nächsten Hops des ersten Datenpakets, die gleich dem Folgenden ist:
- der Adresse des Cluster-Heads, an dem der erste Knoten angeschlossenen ist, falls der Cluster-Head, an dem der erste Knoten angeschlossen ist, aktiv ist; oder
- der Adresse des Backup-Cluster-Heads, die durch den Cluster-Head ausgewählt wird, an dem der erste Knoten angeschlossen ist, falls der Cluster-Head, an dem der erste Knoten angeschlossen ist, nicht aktiv ist.

13. Knoten für ein Telekommunikationsnetzwerk (1), das so konfiguriert ist, das es das Kommunikationsverfahren gemäß einem der vorhergehenden Ansprüche implementiert.

14. Softwareprodukt, das in einen Speicher eines Knotens für ein Telekommunikationsnetzwerk (1) geladen werden kann und so konfiguriert ist, das es, wenn es ausgeführt wird, das Kommunikationsverfahren gemäß einem der Ansprüche 1 bis 12 implementiert.

15. Mobiles Telekommunikationsnetzwerk (1), das eine Vielzahl von Knoten gemäß Anspruch 13 aufweist.

## Revendications

1. Procédé de communication du type protocole de routage à état de liaison optimisé (OLSR) pour un réseau (1) incluant une pluralité de noeuds (2), chaque noeud étant équipé d'une seule interface (I) configurée pour mettre en oeuvre une pile de protocoles et envoyer des paquets avec un niveau de puissance dans une plage entre un premier et un deuxième niveau de puissance, ledit deuxième niveau de puissance étant supérieur au premier niveau de puissance ; ledit procédé comprenant les étapes, réalisées par un premier noeud (2), consistant à :
- déterminer (72), parmi les noeuds voisins, un ensemble respectif de relais multipoints ;
- déterminer (74), parmi les noeuds voisins, les noeuds pour lesquels le premier noeud est un relais multipoint respectif;
- déterminer (78) une table de routage respective, formée par une pluralité d'entrées, chaque entrée comprenant une adresse de destination respective, égale à l'adresse d'un noeud de destination correspondant, et une adresse de saut suivant respective, égale à l'adresse d'un noeud de connexion qui est distant d'un saut du premier noeud et est un relais multipoint du premier noeud, le noeud de destination étant connecté au premier noeud par le biais du noeud de connexion ; et
- déterminer (22-54) un rôle respectif entre une tête de grappe (CH) et un noeud affilié (ST), afin de former une pluralité de grappes de noeuds (8), chaque grappe comprenant une tête de grappe respective et un ensemble de noeuds affiliés à ladite tête de grappe respective, chaque noeud affilié étant distant d'un ou de plusieurs sauts de ladite tête de grappe respective ;
et dans lequel ladite étape consistant à former une table de routage respective comprend, par le premier noeud :
- si le premier noeud est une tête de grappe, le stockage (78) d'entrées dans la table de routage contenant des adresses de destination respectivement égales aux adresses des têtes de grappe différentes du premier noeud et aux adresses des noeuds affiliés au premier noeud ; et
- si le premier noeud est un noeud affilié, le stockage (78) d'entrées dans la table de routage contenant des adresses de destination respectivement égales à l'adresse de la tête de grappe à laquelle le premier noeud est affilié et aux adresses des noeuds affiliés à la tête de grappe à laquelle le premier noeud est affilié ;
ledit procédé de communication comprenant en outre l'étape consistant à envoyer (109a-109b, 111a-111b, 124, 126, 144, 146), par le premier noeud, un premier paquet de données ayant une adresse respective de prochain saut et une adresse de destination respective, l'adresse de destination du premier paquet de données étant égale à l'adresse d'un noeud d'arrivée, et dans lequel :
- si le premier noeud est un noeud affilié et la table de routage du premier noeud contient une entrée ayant une adresse de destination égale à l'adresse du noeud d'arrivée, l'adresse de prochain saut du premier paquet de données est égale à l'adresse de prochain saut de ladite entrée ayant une adresse de destination égale à l'adresse du noeud d'arrivée ;
- si le premier noeud est un noeud affilié et la table de routage du premier noeud ne contient pas d'entrée ayant une adresse de destination égale à l'adresse du noeud d'arrivée, l'adresse de prochain saut du premier paquet de données est égale à l'adresse de prochain saut de l'entrée de la table de routage du premier noeud ayant une adresse de destination égale à l'adresse de la tête de grappe à laquelle le premier noeud est affilié ;
- si le premier noeud est une tête de grappe et la table de routage du premier noeud contient une entrée ayant une adresse de destination égale à l'adresse du noeud d'arrivée, l'adresse de prochain saut du premier paquet de données est égale à l'adresse de prochain saut de ladite entrée ayant une adresse de destination égale à l'adresse du noeud d'arrivée ; et
- si le premier noeud est une tête de grappe et la table de routage du premier noeud ne contient pas d'entrée ayant une adresse de destination égale à l'adresse du noeud d'arrivée, l'adresse de prochain saut du premier paquet de données est égale à l'adresse de prochain saut de l'entrée de la table de routage du premier noeud ayant une adresse de destination égale à l'adresse de la tête de grappe à laquelle le noeud d'arrivée est affilié ;
ledit procédé de communication comprenant en outre l'étape consistant à définir (20) une trame de communication (10) formée par une pluralité de créneaux de communication (12), et dans lequel ladite étape consistant à envoyer (109a-109b, 111a-111b, 124, 126, 144, 146) un premier paquet de données comprend :
- si le premier noeud est une tête de grappe (CH) et la table de routage du premier noeud contient une entrée ayant une adresse de destination égale à l'adresse du noeud d'arrivée, et le noeud d'arrivée est un noeud affilié, le multiplexage (126) de l'envoi du premier paquet de données avec l'envoi, par le premier noeud, d'au moins un deuxième paquet de données dans un même premier créneau de communication (S3), ledit deuxième paquet de données contenant une adresse de prochain saut différente de l'adresse de prochain saut dudit premier paquet de données ;
- si le premier noeud est affilié à une tête de grappe qui est distante d'un saut et l'adresse de prochain saut dudit premier paquet de données est égale à l'adresse de la tête de grappe à laquelle le premier noeud est affilié, la coopération avec au moins un deuxième noeud affilié à la tête de grappe à laquelle le premier noeud est affilié, afin de multiplexer (109b, 111b) l'envoi du premier paquet de données avec l'envoi, par le deuxième noeud, d'un troisième paquet de données, dans un même deuxième créneau de communication (S2), le troisième paquet de données contenant une adresse de prochain saut égale à l'adresse de la tête de grappe à laquelle le premier noeud est affilié.

2. Procédé de communication selon la revendication 1, comprenant en outre, par le premier noeud (2), l'étape consistant à déterminer (60), pour chaque adresse de prochain saut stockée dans la table de routage respective, une puissance de communication correspondante égale à la puissance minimale telle qu'un paquet envoyé par le premier noeud est reçu par le noeud ayant une adresse égale à ladite adresse de prochain saut; et dans lequel ladite étape consistant à envoyer (109a-109b, 111a-111b, 124, 126, 144, 146) un premier paquet de données comprend l'envoi du premier paquet de données avec un niveau de puissance égal à la puissance de communication correspondant à l'adresse de prochain saut du premier paquet de données.

3. Procédé de communication selon la revendication 1 ou 2, dans lequel ladite étape consistant à déterminer (22-54) un rôle respectif comprend, par le premier noeud (2), la réalisation des étapes consistant à :
- transmettre (26, 44), avec le deuxième niveau de puissance, des paquets de commande de voisinage (HELLO) ;
- recevoir (27, 45) des paquets de commande de voisinage transmis par des noeuds voisins du premier noeud ;
- déterminer (28) un ensemble d'adresses de noeuds voisins, sur la base des paquets de commande de voisinage reçus, les paquets de commande de voisinage transmis par le premier noeud étant configurés pour contenir l'ensemble d'adresses de noeuds voisins déterminé par le premier noeud ; et
- contrôler (30) s'il existe deux noeuds voisins du premier noeud qui ne sont pas liés l'un à l'autre ;
ledit procédé de communication comprenant en outre, par le premier noeud, la formation (40) d'un ensemble dominant du réseau (1), s'il existe deux noeuds voisins qui ne sont pas liés l'un à l'autre ; et dans lequel ladite étape consistant à déterminer (22-54) un rôle respectif est réalisée selon que le premier noeud forme ou non l'ensemble dominant.

4. Procédé de communication selon la revendication 3, dans lequel ladite étape consistant à transmettre (44) des paquets de commande de voisinage (HELLO) comprend l'insertion d'une indication du rôle du premier noeud dans chaque paquet de commande de voisinage; et dans lequel ladite étape consistant à déterminer (22-54) un rôle respectif comprend le fait d'assumer (34), par le premier noeud, le rôle de noeud affilié, s'il n'existe pas deux noeuds voisins du premier noeud qui ne sont pas liés l'un à l'autre ; et dans lequel ladite étape consistant à déterminer (22-54) un rôle respectif comprend en outre, s'il existe deux noeuds voisins du premier noeud qui ne sont pas liés l'un à l'autre, la réalisation, par le premier noeud, des étapes consistant à :
- assumer (22) le rôle de noeud affilié ;
- créer (46) une liste de rôles de voisin, incluant les rôles des noeuds voisins du premier noeud, sur la base des paquets de commande de voisinage reçus ;
- communiquer (48) aux noeuds voisins les rôles des noeuds voisins du premier noeud ;
- apprendre (49) les rôles des noeuds voisins aux noeuds voisins du premier noeud ;
- contrôler (50) si l'ensemble d'adresses de noeuds voisins déterminé par le premier noeud est inclus dans l'ensemble d'adresses de noeuds voisins déterminé par une tête de grappe (CH), ou est inclus dans l'union des ensembles d'adresses de noeuds voisins déterminés par deux têtes de grappe (CH) et le premier noeud a une adresse qui respecte une relation prédéterminée avec les adresses desdites deux têtes de grappe ; et
- assumer (52) le rôle de tête de grappe, si l'ensemble d'adresses de noeuds voisins déterminé par le premier noeud n'est pas inclus dans l'ensemble d'adresses de noeuds voisins déterminé par une tête de grappe, ou est inclus dans l'union des ensembles d'adresses de noeuds voisins déterminés par deux têtes de grappe, mais le premier noeud a une adresse qui ne respecte pas ladite relation prédéterminée avec les adresses desdites deux têtes de grappe ; sinon
- conserver (54) le rôle de noeud affilié, si l'ensemble d'adresses de noeuds voisins déterminé par le premier noeud est inclus dans l'ensemble d'adresses de noeuds voisins déterminé par une tête de grappe, ou est inclus dans l'union des ensembles d'adresses de noeuds voisins déterminés par deux têtes de grappe et le premier noeud a une adresse qui respecte ladite relation prédéterminée avec les adresses desdites deux têtes de grappe.

5. Procédé de communication selon l'une quelconque des revendications précédentes, comprenant en outre, si le premier noeud (2) est une tête de grappe (CH), la détermination (53b), par le premier noeud, d'une liste d'adresses de noeuds qui lui sont affiliés et la communication (53c) de ladite liste de noeuds affiliés aux autres têtes de grappe (CH).

6. Procédé de communication selon l'une quelconque des revendications précédentes, comprenant en outre, par le premier noeud (2), la réalisation des étapes consistant à :
- recevoir (bloc 98) un paquet de données entrant, envoyé par un noeud d'envoi voisin du premier noeud et ayant une adresse de destination égale à une adresse de noeud final et une adresse de prochain saut égale à l'adresse du premier noeud ; et
- réaliser ladite étape consistant à envoyer (109a-109b, 111a-111b, 124, 126) un premier paquet de données de sorte que ledit premier paquet de données a une adresse de destination égale à l'adresse du noeud final, afin de retransmettre le paquet de données entrant.

7. Procédé de communication selon l'une quelconque des revendications précédentes, comprenant en outre, par le premier noeud (2), la réalisation des étapes consistant à :
- transmettre (76) au moins un paquet de commande de topologie (TC) contenant les adresses des noeuds pour lesquels le premier noeud est un relais multipoint ; et
- recevoir (77) des paquets de commande de topologie envoyés par des noeuds voisins du premier noeud ;
ledit procédé de communication comprenant en outre, pour chaque paquet de commande de topologie reçu, la réalisation, par le premier noeud, des étapes consistant à :
- si le premier noeud est une tête de grappe, retransmettre le paquet de commande de topologie reçu, si ledit paquet de commande de topologie a été envoyé par un noeud pour lequel le premier noeud est un relais multipoint respectif et provient soit d'une tête de grappe, soit d'un noeud affilié au premier noeud ; et
- si le premier noeud est un noeud affilié, retransmettre le paquet de commande de topologie reçu, si ledit paquet de commande de topologie a été envoyé par un noeud pour lequel le premier noeud est un relais multipoint respectif et provient soit de la tête de grappe à laquelle le premier noeud est affilié, soit d'un noeud affilié à la même tête de grappe à laquelle le premier noeud est affilié ;
et dans lequel l'étape consistant à déterminer (78) une table de routage respective comprend la détermination de ladite table de routage sur la base des paquets de commande de topologie reçus.

8. Procédé de communication selon la revendication 7, lorsqu'elle dépend de la revendication 3 ou 4, comprenant en outre l'étape consistant à déterminer, par le premier noeud, un ensemble de noeuds qui sont distants de deux sauts du premier noeud, sur la base des paquets de commande de voisinage reçus ; et dans lequel ladite étape consistant à déterminer (72) un ensemble de relais multipoints respectif est réalisée sur la base de l'ensemble d'adresses de noeuds voisins déterminé par le premier noeud et sur la base de l'ensemble de noeuds qui sont distants de deux sauts du premier noeud ; et dans lequel ladite étape consistant à transmettre (26, 44) des paquets de commande de voisinage (HELLO) comprend l'insertion de l'ensemble de relais multipoints déterminé par le premier noeud dans lesdits paquets de commande de voisinage, ladite étape consistant à déterminer (74) les noeuds pour lesquels le premier noeud est un relais multipoint étant réalisée sur la base de paquets de commande de voisinage reçus par le premier noeud ; et dans lequel ladite étape consistant à déterminer (28) un ensemble d'adresses de noeuds voisins comprend :
- si le premier noeud est une tête de grappe, la mise à jour, par le premier noeud, de l'ensemble d'adresses de noeuds voisins et de l'ensemble de noeuds qui sont distants de deux sauts avec une périodicité au moins égale à une première période de temps prédéterminée, sur la base des paquets de commande de voisinage reçus durant ladite première période de temps prédéterminée ;
- si le premier noeud est un noeud affilié, la mise à jour, par le premier noeud, de l'ensemble d'adresses de noeuds voisins et de l'ensemble de noeuds qui sont distants de deux sauts, à chaque réception d'un paquet de commande de voisinage ;
et dans lequel l'étape consistant à déterminer (78) une table de routage respective comprend :
- si le premier noeud est une tête de grappe, la mise à jour de la table de routage avec une périodicité au moins égale à une deuxième période de temps prédéterminée, sur la base des paquets de commande de topologie reçus durant ladite deuxième période de temps prédéterminée ;
- si le premier noeud est un noeud affilié, la mise à jour de la table de routage à chaque réception d'un paquet de commande de topologie.

9. Procédé de communication selon l'une quelconque des revendications précédentes, dans lequel ladite étape consistant à déterminer (72), parmi les noeuds voisins, un ensemble de relais multipoints respectif, est réalisée d'une manière telle que, si le premier noeud est une tête de grappe (CH), le premier noeud est un relais multipoint à la fois des noeuds affiliés au premier noeud et voisins du premier noeud, et des têtes de grappe voisines du premier noeud.

10. Procédé de communication selon l'une quelconque des revendications précédentes, dans lequel ladite étape consistant à déterminer (78) une table de routage respective comprend, par le premier noeud (2) :
- si le premier noeud (STA) est un noeud affilié, le stockage (78) au moins d'une entrée dans la table de routage contenant une adresse de destination égale à l'adresse d'un noeud de proximité (STB) affilié à une tête de grappe (CHB) différente de la tête de grappe (CHA) à laquelle le premier noeud est affilié, ladite entrée contenant une adresse de prochain saut égale à l'adresse d'un noeud frontière (STB) voisin du premier noeud et affilié à ladite tête de grappe (CHB) différente de la tête de grappe (CHA) à laquelle le premier noeud est affilié ;
ledit procédé comprenant en outre les étapes consistant à, par le premier noeud :
- déterminer (140) s'il faut router le premier paquet de données vers la tête de grappe à laquelle le premier noeud est affilié ou vers le noeud frontière ; et
- si le premier noeud a déterminé de router le premier paquet de données vers la tête de grappe à laquelle le premier noeud est affilié, réaliser ladite étape consistant à envoyer (144, 146) le premier paquet de données de sorte que ledit premier paquet de données a une adresse de destination égale à l'adresse du noeud de proximité ; et
- si le premier noeud a déterminé de router le premier paquet de données vers le noeud frontière, empêcher la réalisation de ladite étape consistant à envoyer le premier paquet de données et transmettre (148) un paquet direct, ayant une adresse de destination égale à l'adresse du noeud de proximité et une adresse de prochain saut égale à l'adresse du noeud frontière.

11. Procédé de communication selon l'une quelconque des revendications précédentes, dans lequel ladite étape consistant à envoyer (109a-109b, 111a-111b, 124, 126, 144, 146) un premier paquet de données comprend, par le premier noeud :
- si le premier noeud est un noeud affilié (ST2) et est distant de plus d'un saut de la tête de grappe (CH) à laquelle il est affilié, la coopération avec les autres noeuds affiliés à la tête de grappe à laquelle le premier noeud est affilié, afin d'envoyer le premier paquet de données sans multiplexage ;
- si le premier noeud est une tête de grappe et la table de routage du premier noeud ne contient pas d'entrée ayant une adresse de destination égale à l'adresse du noeud d'arrivée, ou si le premier noeud est une tête de grappe et la table de routage du premier noeud contient une entrée ayant une adresse de destination égale à l'adresse du noeud d'arrivée, qui est une tête de grappe, la coopération avec les autres têtes de grappe afin d'envoyer le premier paquet de données sans multiplexage.

12. Procédé de communication selon l'une quelconque des revendications précédentes, comprenant en outre, par le premier noeud :
- si le premier noeud est une tête de grappe (CH), la sélection d'une tête de grappe de sauvegarde parmi les noeuds voisins du premier noeud et affiliés au premier noeud ;
et dans lequel ladite étape consistant à former une table de routage respective comprend, par le premier noeud :
- si le premier noeud est un noeud affilié et distant d'un saut de la tête de grappe respective (CH) et la tête de grappe de sauvegarde, le stockage (78) dans la table de routage d'une entrée contenant une adresse de destination égale à l'adresse de la tête de grappe à laquelle le premier noeud est affilié et une adresse de prochain saut égale à l'adresse de la tête de grappe de sauvegarde correspondante, et d'une entrée dans laquelle les adresses de destination et de prochain saut sont toutes deux égales à l'adresse de la tête de grappe à laquelle le premier noeud est affilié ;
ledit procédé comprenant en outre, si le premier noeud est voisin de la tête de grappe à laquelle il est affilié et de la tête de grappe de sauvegarde correspondante :
- si la table de routage du premier noeud ne contient pas d'entrée ayant une adresse de destination égale à l'adresse du noeud d'arrivée, le réglage de l'adresse de prochain saut du premier paquet de données égale à :
- l'adresse de la tête de grappe à laquelle le premier noeud est affilié, si la tête de grappe à laquelle le premier noeud est affilié est active ; ou
- l'adresse de la tête de grappe de sauvegarde sélectionnée par la tête de grappe à laquelle le premier noeud est affilié, si la tête de grappe à laquelle le premier noeud est affilié n'est pas active.

13. Noeud pour un réseau de télécommunications (1), configuré pour mettre en oeuvre le procédé de communication selon l'une quelconque des revendications précédentes.

14. Produit logiciel qui peut être chargé dans une mémoire d'un noeud pour un réseau de télécommunications (1) et configuré pour mettre en oeuvre, lorsqu'il est exécuté, le procédé de communication selon l'une quelconque des revendications 1 à 12.

15. Réseau mobile de télécommunications (1) comprenant une pluralité de noeuds selon la revendication 13.
